# EUROPÄISCHE PATENTSCHRIFT

(11) **EP 4 698 801 B1**
(45) Veröffentlichungstag und Bekanntmachung des Hinweises auf die Patenterteilung: **25.11.2026**
(21) Anmeldenummer: 24720791.3
(22) Anmeldetag: 17.04.2024
(51) Int. Cl.: F16G 13/16, H02G 11/00

(54) **ENERGIEFÜHRUNGSKETTE AUS INNEN- UND AUSSENLASCHEN MIT INTEGRIERTEM ANSCHLAGSYSTEM**
ENERGY CHAIN COMPRISING INNER AND OUTER LINKS WITH INTEGRATED STOP SYSTEM
CHAÎNE DE GUIDAGE D'ÉNERGIE CONSTITUÉE DE MAILLONS INTÉRIEURS ET EXTÉRIEURS AVEC SYSTÈME DE BUTÉE INTÉGRÉ

(30) Priorität: 17.04.2023 DE 202023101968 U
(43) Veröffentlichungstag der Anmeldung: 25.02.2026
(73) Patentinhaber: igus SE & Co. KG, 51147 Köln (DE)
(72) Erfinder: STRACK, Stefan, 53639 Königswinter (DE); ZIEGLER, Christian, 53859 Niederkassel (DE)
(74) Vertreter: Lippert Stachow Patentanwälte Rechtsanwälte
(86) Internationale Anmeldenummer: PCT/EP2024/060460
(87) Internationale Veröffentlichungsnummer: WO 2024/218173

(56) Entgegenhaltungen:
- EP-A1- 2 233 782
- EP-B1- 3 938 678
- US-B2- 8 549 831

## Beschreibung

Die Erfindung betrifft allgemein das Gebiet der Energieführungsketten zur dynamischen Führung von Leitungen zwischen zwei Anschlussstellen, von denen mindestens eine Anschlussstelle zur anderen relativbeweglich ist. Eine Kernfunktion von Energieführungsketten besteht darin die Leitungen, insbesondere Versorgungsleitungen, wie **z.B.** Kabel für Daten oder Strom oder Schläuche für Betriebsmedien, bei Relativbewegungen geschützt zu Führen und dabei einen vordefinierten Krümmungsradius im sog. Umlenkbogen zwischen den Kettentrumen einzuhalten.

Energieführungsketten haben dazu typisch Kettenglieder mit jeweils zwei gegenüberliegenden Laschen (auch Seitenlaschen oder Seitenteile genannt). Bei zumindest einem Teil der Kettenglieder, z.B. jedem zweiten Kettenglied, oder bei allen Kettengliedern sind die Laschen über mindestens einen, meist zwei Querstege miteinander verbunden. Die Querstege sind dabei entweder fest oder lösbar vorgesehen. Die Kettenglieder definieren einen inneren Aufnahmeraum zum Führen der Leitungen, wie z.B. Kabel zur elektrischen Signal- oder Stromversorgung oder pneumatische bzw. hydraulische Schläuche. Die Laschen sind dabei typisch so gestaltet, dass sie einen gewünschten maximalen Verschwenkwinkel der Laschen zueinander gewährleisten, der den Krümmungsradius im Umlenkbogen bestimmt.

Speziell bei Energieführungsketten aus Kunststofflaschen haben sich zwei Typen sehr bewährt. Einerseits ist die Bauweise mit sogenannten gekröpften Laschen bewährt. Andererseits ist die Bauweise mit alternierenden Innen- und Außenlaschen bewährt.

Kunststofflaschen für Energieführungsketten werden ganz überwiegend im Spritzgussverfahren hergestellt. Es bestehen hierbei vollkommen andere Anforderungen im Vergleich zu Energieketten mit Seitenlaschen aus Metall.

Vorliegend wird von einer Bauweise mit Laschen aus Kunststoff ausgegangen, nämlich mit alternierenden Innen- und Außenlaschen. Als nächstliegender Stand der Technik wird vorliegend eine solche Energieführungskette mit Laschen aus Kunststoff gemäß der Lehre aus WO 2020/152349 A1 angesehen. Zwei wesentliche Vorteile von Ketten mit Innen- und Außenlaschen gegenüber gekröpften Laschen sind ein verbesserter Geradlauf der Kette, weil Längenunterschiede der beiden Stränge prinzipiell ausgeschlossen sind, sowie eine schnellere Montage.

Die WO 2020/152349 A1 beschreibt eine Energieführungskette nach dem Oberbegriff aus Anspruch 1, die zur Führung von Leitungen, zwischen zwei Anschlussstellen bestimmt ist. Die Kettenglieder haben jeweils zwei gegenüberliegende Laschen aus Kunststoff. Bei zumindest einigen Kettengliedern sind die Laschen über mindestens einen Quersteg miteinander verbunden. Die Energieführungskette gemäß WO 2020/152349 A1 hat zwei Laschenstränge jeweils mit in Längsrichtung (=Kettenlängsrichtung) alternierend aufeinanderfolgenden Innenlaschen und Außenlaschen, wobei die Innenlaschen zwei dem Ketteninneren zugewandte innere Überlappungsbereiche und die Außenlaschen zwei dem Ketteninneren abgewandte bzw. seitlich äußere Überlappungsbereiche aufweisen. Bei jeweils zwei im Laschenstrang in Längsrichtung benachbarten Laschen, überlappt die eine bzw. eine erste Lasche mit einem ihrer Überlappungsbereiche einen entsprechend komplementären Überlappungsbereich der anderen Lasche bzw. der zweiten von den beiden überlappenden Laschen. Die beiden überlappenden Laschen sind jeweils gelenkig in einer Ebene um eine Schwenkachse verschwenkbar miteinander verbunden. Dabei sind an den Laschen zur bestimmungsgemäßen Schwenkwinkelbegrenzung Anschlagvorsprünge und korrespondierende Anschlagtaschen vorgesehen. Die Anschlagvorsprünge des Überlappungsbereichs der einen Lasche greifen in die Anschlagtaschen des Überlappungsbereich der anderen Lasche. Als Anschlag wirksame Anschlagflächen eines Anschlagvorsprungs wirken mit Gegenanschlagflächen einer Anschlagtasche zusammen und bewirken eine Schwenkwinkelbegrenzung bei der relativen Schwenkbewegung bzw. Abwinkelung der beiden überlappenden bzw. verbundenen Laschen.

Die vorliegende Erfindung betrifft zunächst insbesondere die Bauweise bzw. Gestaltung des Anschlagsystems für sich genommen. Dieses ist insbesondere integral an den Kettenlaschen, und insbesondere bei alternierenden Innen- und Außenlaschen vorgesehen. Die zusammenwirkenden Anschlagflächen und Gegenanschlagflächen dienen bestimmungsgemäß bzw. vor allem dazu, den Krümmungsradius des Umlenkbogens vorzugeben, mittels welchem das ruhende Trum der Energieführungskette in das bewegte Trum übergeht. Hierzu sind die Kettenglieder um einen vordefinierten Winkel in einem ersten Drehsinn gegeneinander schwenkbar bzw. abwinkelbar. Die Anschlagflächen und Gegenanschlagflächen können weitere Nebenfunktionen haben, z.B. können diese zum Übertragen von Zug- und Druckkräften im Laschenstrang beitragen.

Für bestimmte Anwendungen ist es erforderlich, eine rückwärtige Krümmung der Energieführungskette zu ermöglichen, d.h. ein Verschwenken der Kettenglieder zueinander in einer der Schwenkrichtung zur Bildung des eigentlichen Umlenkbogens entgegengesetzte Schwenkrichtung, die nachfolgend als "rückwärtige" Schwenkrichtung bezeichnet wird. Dementsprechend kann ein gewünschter rückwärtiger Krümmungsradius als ein vorbestimmter Krümmungsradius im Drehsinn entgegen demjenigen im Umlenkbogen verstanden werden. Die rückwärtige Krümmung ist dabei der Krümmung des typischen Umlenkbogens, der beim Verfahren gebildet wird, entgegengesetzt. Bei gewünschter Rückwärtskrümmung sind zumindest einige Kettenglieder dann um einen vordefinierten Winkel in einem zweiten, dem ersten Drehsinn entgegengesetzten Drehsinn "rückwärtig" gegeneinander schwenkbar bzw. abwinkelbar.

Eine von mehreren typischen Anwendungen, die einen rückwärtigen Krümmungsradius erfordert ist die Verwendung der Energieführungskette für eine Kreisbewegung. Hierbei wird die Energieführungskette meist seitlich liegend eingesetzt, und beide Trume der Energieführungskette sind zum Folgen einer Kreisbewegung des bewegten Anschlussendes rückwärtig biegsam. Es sind jedoch auch andere Anwendungen bekannt bei denen die Energieführungskette nur in bestimmten Abschnitten ihrer Länge einen rückwärtigen Krümmungsradius aufweist, z.B. bei einer zickzackförmigen Ablage für Vertikalbewegungen wie in WO 99/54641 A2 beschrieben.

Ein bekannter Ansatz um den relativen Schwenkwinkel der Kettenglieder bzw. Seitenlaschen wahlweise einstellen zu können, ist die Verwendung von sog. Radieneinsätzen oder Radienscheiben zur Vorgabe ausgewählter Radien, die als separater Bauteile im Anschlagsystem wahlweise austauschbar verwendet werden. Derartige Lösungen sind bekannt aus z.B. EP0499784A1 oder US4800714A (vgl. dort FIG.10) oder auch aus WO 2010/029092 A1. Nachteilig bei derartigen Ansätzen sind u.a. die reduzierte mechanische Festigkeit des Laschenstrangs bzw. festigkeitsbedingte Erhöhung der Laschenbreite bzw. höheres Gewicht, die Erhöhung der Bauteilanzahl, Verschleiß der Radieneinsätze oder Radienscheiben, und nicht zuletzt eine aufwendigere Montage und Wartung. Derartige Energieführungsketten mit Radieneinsätzen oder Radienscheiben werden vorliegend nicht als gattungsgemäß angesehen.

Für gattungsgemäße Energieführungsketten, d.h. solche mit einem Anschlagsystem mit Anschlagvorsprüngen und korrespondierenden Anschlagtaschen, die einteilig mit bzw. integral von den Laschen gebildet werden, ist ein anderer Ansatz bekannt, um den relativen Schwenkwinkel der Kettenglieder bzw. Seitenlaschen wahlweise einzustellen. Dieser Ansatz besteht im Kern darin, die Anschlagtaschen jeweils wahlweise passend zu dimensionieren. So wird die Abmessung der Anschlagtaschen in der einen Schwenkrichtung verkleinert für größere (normale) Biegeradien. Demgegenüber wird zur Erzielung eines gewünschten rückwärtigen Biegeradius der Energieführungskette die Abmessung der Anschlagtaschen in die andere Schwenkrichtung vergrößert. Insbesondere die Vergrößerung der Anschlagtaschen kann dabei auch durch nachträgliche Bearbeitung der Laschen, z.B. durch Fräsen, erfolgen. Dies setzt jedoch voraus, dass zwischen den Anschlagtaschen hinreichend Material des vorgefertigten Laschenkörpers vorhanden ist, das nachträglich entfernt werden kann. Letzteres wiederum steht im Widerspruch zu einer möglichst maximalen Ausnutzung des Überlappungsbereichs zwecks Bildung von (Gegen-)Anschlagflächen und bringt weitere Nachteile mit sich, insbesondere den einhergehenden Nachbearbeitungsaufwand.

Bei der gattungsgemäßen Energieführungskette nach WO 2020/152349 A1 ist die Gestaltung dahingehend optimiert, dass im Überlappungsbereich zwischen einer Innenlasche und Außenlaschen eine maximale Ausnutzung des Laschenmaterials bzw. Volumens zur Bereitstellung von Anschlagvorsprüngen und Anschlagtaschen vorgesehen ist. Mit einer derart optimierten Gestaltung ist es nicht ohne weiteres möglich, einen gewünschten rückwärtigen Krümmungsradius bereitzustellen.

Es besteht insoweit ein Bedarf, eine Verbesserung vorzuschlagen hinsichtlich der Möglichkeiten, den gewünschten relativen Schwenkwinkel der Kettenglieder wahlweise einzustellen.

### ERSTER ASPEKT

Eine erste Aufgabe der vorliegenden Erfindung besteht darin, eine Weiterentwicklung einer gattungsgemäßen Energieführungskette vorzuschlagen. Diese soll insbesondere so gestaltet sein, dass auch gewünschte rückwärtige Krümmungsradien ermöglicht werden, ohne die Vorteile des Anschlagsystems mit in den Laschen integrierten Anschlagvorsprüngen und Anschlagtaschen, wie z.B. in WO 2020/152349 A1 vorgeschlagen, aufgeben zu müssen. Weiterhin soll dabei das Anschlagsystems eine in Summe möglichst große Anschlagfläche bei zugleich schmaler bzw. leichter Bauweise der Laschen bereitstellen. Insoweit soll insbesondere auch eine Weiterentwicklung der Gestaltung nach WO 2020/152349 A1 vorgeschlagen werden.

Diese erstgenannte Aufgabe zum ersten Aspekt der Erfindung wird gelöst mit einer Energieführungskette nach dem unabhängigen Anspruch 1 bzw. dem unabhängigen Anspruch 2. Weitere vorteilhafte Ausführungsformen ergeben sich aus den abhängigen Ansprüchen.

Vorgeschlagen wird insbesondere eine Energieführungskette zur Führung von Leitungen, mit Kettengliedern mit zwei gegenüberliegenden Laschen, insbesondere aus Kunststoff, wobei zumindest in einigen Kettengliedern die Laschen über mindestens einen Quersteg miteinander verbunden sind.

Die gattungsgemäße Energieführungskette hat in ihren zwei Laschensträngen jeweils in Längsrichtung alternierend aufeinanderfolgende Innenlaschen und Außenlaschen, wobei die Innenlaschen zwei dem Ketteninneren zugewandte innere Überlappungsbereiche und die Außenlaschen zwei dem Ketteninneren abgewandte äußere Überlappungsbereiche aufweisen. Eine Bauweise mit gekröpften Laschen ist somit grundsätzlich vorliegend beim ersten Aspekt nicht gemeint bzw. nicht als gattungsgemäß angesehen. Von jeweils zwei im Laschenstrang in Längsrichtung benachbarten bzw. unmittelbar verbundenen Laschen, überlappt die eine bzw. eine erste Lasche mit einem ihrer Überlappungsbereiche einen entsprechend komplementären Überlappungsbereich der anderen bzw. einer zweiten verbundenen Lasche. In den überlappenden Überlappungsbereichen sind die beiden Laschen jeweils gelenkig in einer Ebene um eine Schwenkachse verschwenkbar miteinander verbunden.

Die Überlappungsbereiche umfassen weiterhin jeweils ein integriertes Anschlagsystem zur Schwenkwinkelbegrenzung der relativen Verschwenkung bzw. Abwinkelung zweier verbundener Laschen. Hierzu sind Anschlagvorsprünge im Überlappungsbereich der einen (ersten) Lasche vorgesehen und korrespondierende Anschlagtaschen im Überlappungsbereich der anderen (zweiten) Lasche vorgesehen. Die Anschlagvorsprünge greifen in die Anschlagtaschen. Die Anschlagvorsprünge und Anschlagtaschen dienen zur Schwenkwinkelbegrenzung. Hierbei wirken Anschlagflächen eines Anschlagvorsprungs mit Gegenanschlagflächen einer Anschlagtasche zur Schwenkwinkelbegrenzung - d.h. zur Vorgabe des gewünschten Schwenkwinkels - zusammen, insbesondere eine Anschlagfläche mit einer Gegenanschlagfläche in die eine Schwenkrichtung und eine gegenüberliegende weitere Anschlagfläche mit einer gegenüberliegenden weiteren Gegenanschlagfläche in die entgegengesetzte Schwenkrichtung. Vorteilhaft kann dabei die eine (erste) Lasche mit den Anschlagvorsprünge die Außenlasche sein, und die andere (zweite) Lasche mit den Anschlagtaschen kann somit die Innenlasche sein. Auch eine umgekehrte Anordnung ist grundsätzlich möglich und liegt ebenfalls im Rahmen der Erfindung.

Erfindungsgemäß bzw. gemäß einem ersten Aspekt der Erfindung wird, insbesondere zwecks Gestaltung des integrierten Anschlagsystems zur Lösung der erstgenannten Aufgabe, eine Kombination von Gestaltungsmaßnahmen vorgeschlagen, die sich dadurch auszeichnet:
- dass in jedem der beiden Überlappungsbereiche der einen Lasche, insbesondere der Innenlasche, jeweils drei, insbesondere genau drei, einteilig mit dieser Lasche gebildete Anschlagvorsprünge vorgesehen sind, wobei die drei Anschlagvorsprünge jeweils eine Sperrweite zwischen ihren Anschlagflächen aufweisen mit einem Winkelmaß der Sperrweite,
- dass in jedem der beiden Überlappungsbereiche der anderen Lasche, insbesondere der Außenlasche, jeweils drei, insbesondere genau drei, zu einem Anschlagvorsprung korrespondierende und als Vertiefung in dieser Lasche gebildete Anschlagtaschen vorgesehen sind, wobei die drei Anschlagtaschen jeweils eine Öffnungsweite zwischen ihren Gegenanschlagflächen aufweisen mit einem Winkelmaß der Öffnungsweite,
- und dass die Gestaltung so dimensioniert ist, dass das Winkelmaß (α) der Sperrweite eines Anschlagvorsprungs mindestens 50% des Winkelmaß (β) der Öffnungsweite einer Anschlagtasche beträgt, wobei dies jedenfalls bei Kettengliedern bzw. Laschen ohne nennenswerten rückwärtigen Biegeradius vorgesehen ist.

Erfindungsgemäß ist das anschlagwirksame Winkelmaß (α) der Sperrweite eines Anschlagvorsprungs somit in Relation zum Winkelmaß (β) der Öffnungsweite einer Anschlagtasche, welches die relative Verschwenkung erlaubt - zumindest bei allen Kettengliedern bzw. Baureihen ohne rückwärtigen Biegeradius oder auch bei Baureihen mit nur geringfügigem rückwärtigen Biegeradius - in erfindungsgemäßer Gestaltung im Vorhinein relativ groß gewählt. Das Winkelmaß der Sperrweite eines bzw. jedes Anschlagvorsprungs einer Lasche beträgt bevorzugt jeweils mindestens 40° (1/9 * 2π rad), jedenfalls bei allen Kettengliedern ohne rückwärtigen Biegeradius. Für hinreichend kleine Umlenkradien im Umlenkradius beträgt dabei das Winkelmaß der Öffnungsweite einer bzw. jeder Anschlagtasche einer Lasche bevorzugt jeweils mindestens 55° gemessen im Gradmaß bzw. 55 Grad (im Gradmaß wird der Vollwinkel in 360 gleich große Teile unterteilt, als ein Grad bezeichnet, mit dem Einheitenzeichen "°").

Beim integrierten Anschlagsystem im Sinne der Erfindung schlagen die einteilig mit den Laschen gebildeten Anschlagvorsprünge mit ihrer jeweiligen Anschlagfläche anschlagwirksam insbesondere unmittelbar an den entsprechenden Anschlägen (Gegenanschlagflächen) der Anschlagtaschen an, d.h. bevorzugt ohne zwischenliegende Teile wie z.B. Radieneinsätze oder dgl.

Die Anschlagvorsprünge bewegen sich beim Verschwenken innerhalb der Anschlagtaschen und zwar auf einem Kreisbogen gemäß einer Kreisbewegung bzw. Rotation um die Schwenkachse. Das vorliegend betrachtete Winkelmaß bezieht sich auf die Anschlagwirkung und kann insbesondere als Winkelmaß des jeweiligen Bogens betrachtet werden, den Anschlagvorsprünge bzw. Anschlagtaschen auf einem der Kreisbewegung entsprechenden gedachten Kreis um die Schwenkachse begrenzen, wobei die Gestaltung und Anordnung der Anschlagflächen und Gegenanschlagfläche dabei verschiedenartig sein kann.

Die Begriffe Winkelmaß (α) der Sperrweite eines Anschlagvorsprungs und Winkelmaß (β) der Öffnungsweite einer Anschlagtasche sind insbesondere so zu verstehen, dass die Differenz aus Winkelmaß (β) der Öffnungsweite und Winkelmaß (α) der Sperrweite dem gewünschten, vorgegebenen Verschwenkwinkel zwischen den beiden Kettengliedern ergibt. Der Scheitel des jeweils betrachteten Winkels kann, muss dabei aber insbesondere nicht mit der Schwenkachse zusammenfallen.

Die Differenz aus Winkelmaß (β) der Öffnungsweite der Anschlagtasche und Winkelmaß (α) der Sperrweite eines Anschlagvorsprungs ergibt somit - bei Baureihen ohne rückwärtigem Biegeradius - den gewünschten relativen Verschwenkwinkel im Umlenkbogen (soz. "vorwärtiger" Verschwenkwinkel). Daraus folgt, dass der nominale Biegeradius in Schwenkrichtung zur Bildung des Umlenkbogens (nicht rückwärtig) durch Veränderung der Öffnungsweite der Anschlagtaschen oder durch Veränderung der Sperrweite der Anschlagvorsprünge eingestellt werden kann. Beides kann durch Austausch entsprechender (Werkzeug-)Einsätze in den zur Spritzgussfertigung genutzten Werkzeugen erreicht werden. Der anwendungsabhängig gewünschte Biegeradius im Umlenkbogen ist dabei insbesondere abhängig von der Kettenteilung und vom Verschwenkwinkel im Umlenkbogen (in die nicht rückwärtige Schwenkrichtung).

Bevorzugt wird für größere Biegeradien die Öffnungsweite der Anschlagtaschen reduziert, d.h. die Sperrweite der Anschlagvorsprünge nicht verändert. Ergänzend oder alternativ könnte allerdings auch die Sperrweite der Anschlagvorsprünge vergrößert werden.

Die erfindungsgemäße Kombination aus Gestaltungsmaßnahmen besteht im Kern darin, jeweils ein Anschlagsystem mit genau bzw. exakt drei Anschlagvorsprüngen bzw. Anschlagtaschen vorzusehen, wobei Anschlagvorsprünge bzw. Anschlagtaschen bei gewöhnlichen Kettengliedern ohne rückwärtigen Biegeradius derart dimensioniert sind, dass die Anschlagvorsprünge mindestens die Hälfte der Öffnungsweite der Anschlagtaschen einnehmen. Durch diese im Nachhinein einfach erscheinende Maßnahmenkombination wird - insbesondere unter Beibehaltung wesentlicher Vorteile einer Gestaltung nach WO 2020/152349 A1 - ermöglicht, dass zur Realisierung rückwärtiger Biegeradien lediglich die Anschlagvorsprünge bezüglich des Winkelmaßes (α) der Sperrweite angepasst werden. Als Nachteil der Gestaltung nach WO 2020/152349 A1 wurde nämlich erkannt, dass das dort beschriebene Anschlagsystem grundsätzlich keine rückwärtigen Biegeradien ermöglicht, jedenfalls nicht ohne wesentliche Nachteile.

Der erste Aspekt der Erfindung eröffnet einige Vorteile. So kann die Realisierung rückwärtiger Biegeradien durch Austausch von (Werkzeug-)Einsätzen in den Formwerkzeugen zur Spritzgussfertigung der Laschen erfolgen, d.h. eine Nachbearbeitung der Laschen ist nicht erforderlich. Weiterhin muss bei gegebenem Biegeradius im Umlenkbogen für Längsabschnitte, die mit rückwärtigen Biegeradien in diesem Bereich auszustatten sind, lediglich die eine der beiden Laschen passend gewählt werden, insbesondere nur die Außenlasche mit den passenden Anschlagvorsprüngen, was die Montage und ggf. auch spätere Wartung weiter vereinfacht. Zudem wird bei der anderen Lasche mit Anschlagtaschen eine optimale bzw. maximale Ausnutzung des Laschenkörpers hinsichtlich Anschlagflächen ermöglicht, ohne die Festigkeiten durch nachträgliche Bearbeitung zu verändern. Insbesondere in Längsabschnitten mit rückwärtigen Biegeradien bleiben die Festigkeitswerte somit im Wesentlichen unverändert gegenüber Bereichen gleicher Bauart ohne rückwärtige Biegeradien. Weiterhin erlaubt die Gestaltung ggf. auch relativ große rückwärtige Biegeradien mit Verschwenkwinkeln gleich oder größer dem gewöhnlichen bzw. nominalen Biegeradius (im Umlenkbogen). Daneben bietet die Kombination mit genau drei Anschlägen pro System weitere Vorteile, z.B. hinsichtlich Kraftflüssen und Reduzierung von Scherkräften auf die Gelenkverbindung in der Strecklage des bewegten Trums.

Ein besonderer Vorteil der Erfindung, insbesondere eines Anschlagsystems mit genau drei Anschlagvorsprüngen bzw. Anschlagtaschen, wurde erkannt in der optimierten Ausnutzung von Bauraum bzw. Volumen bei beiden Überlappungsbereichen, sowohl der Innenlaschen als auch der Außenlaschen, insbesondere für das Anschlagsystem bzw. für die Erzielung von Anschlagflächen.

Da die Sperrweite der Anschlagvorsprünge erfindungsgemäß relativ groß voreingestellt ist, kann diese reduziert werden zur Erzielung rückwärtiger Biegeradien, ohne dabei die Dimensionierung der Anschlagtaschen einer gegebenen Baureihe vergrößern zu müssen. Somit bleibt insbesondere die Festigkeit der Laschen mit den Anschlagtaschen, typisch der Innenlaschen, unverändert.

Erfindungsgemäß kann somit eine Energieführungskette nach dem Oberbegriff aus Anspruch 2 realisiert werden, die sich u.a. dadurch auszeichnet, dass in zumindest einem Längsabschnitt der Energieführungskette das Winkelmaß (α) der Sperrweite der Anschlagvorsprünge an der einen Art Lasche bzw. den ersten Laschen so gewählt ist, dass diese eine Art bzw. die ersten Laschen - vorzugsweise Außenlaschen - gegenüber einer gestreckten Lage (d.h. in Längsrichtung gerichteten Relativlage der beiden verbundenen Laschen), sowohl in einer ersten Schwenkrichtung als auch in einer entgegengesetzten zweiten rückwärtigen Schwenkrichtung relativ zu den damit verbundenen Laschen der anderen Art bzw. den zweiten Laschen - vorzugsweise Innenlaschen - um die jeweilige Schwenkachse verschwenkbar sind.

Somit sind zur Realisierung rückwärtiger Biegeradien die Anschlagvorsprünge bezüglich des Winkelmaßes (α) ihrer Sperrweite angepasst dimensioniert, im Gegensatz zum bekannten Stand der Technik, der entweder Radieneinsätze nutzt oder die Anschlagtaschen bzw. Ausnehmungen in den Laschen vergrößert, was unter anderem nachteilig die Festigkeit dieser Laschen reduziert.

Für typische Biegeradien des Umlenkbogens, z.B. 125mm bis z.B. 500mm oder größer je nach Anwendung, ist es konstruktiv vorteilhaft, wenn die drei Anschlagtaschen ein Winkelmaß der Öffnungsweite zwischen ihren Gegenanschlagflächen von jeweils mindestens 60° (β ≥ 60° bzw. ≥ π/3 rad) aufweisen, wobei die Öffnungsweite bei Biegeradien auch größer gewählt sein kann, z.B. β ≥ 70° bei Biegeradien <250mm im Umlenkbogen. Das konkrete Winkelmaß ist u.a. vom gewählten Winkelmaß (α) der Sperrweite der Anschläge bzw. Anschlagvorsprünge abhängig. Dies erlaubt u.a. auch bei kleinstmöglichem Biegeradius noch eine hinreichende Dimensionierung des Anschlagvorsprungs für den entgegengesetzten rückwärtigen Biegeradius, ggf. mit einem in beide Richtungen gleichen Verschwenkwinkel gegenüber der Strecklage bzw. Längsrichtung.

In besonders bevorzugten Ausführungsformen ist vorgesehen, dass die Laschenbreite des Laschenstrangs aus verbundenen Innenlaschen und Außenlaschen, d.h. die Breite des Laschenstrangs gemessen in Richtung parallel zur Schwenkachse an den breitesten Stellen, jeweils maximal 25mm beträgt. Bevorzugt haben die Laschen aller erfindungsgemäßer Baureihen eine Dimensionierung, sodass im Strang eine Laschenbreite ≤ 20mm, besonders bevorzugt ≤ 16mm, resultiert. Hierbei sind die Laschen, insbesondere Innenlaschen und Außenlaschen, vorzugsweise hinsichtlich ihrer Laschenhöhe, gemessen von Schmalseite zur Schmalseite (Außenhöhe), und Laschenbreite vorzugsweise so dimensioniert, dass das Verhältnis der Laschenbreite zur Außenhöhe jeweils ≤ 20% beträgt, besonders bevorzugt ≤ 18% beträgt. Der Begriff Laschenbreite (des Laschenstrangs) bezieht sich auf die sich aus der Hälfte der Differenz aus Außenbreite und Innenbreite eines betrachteten Kettenglieds ergebende Breitenabmessung, also auf eine Querschnittsbetrachtung in der Ebene senkrecht zur Kettenlängsrichtung. Dabei haben Innenlaschen und Außenlaschen nicht zwingend eine identische Einzelbreite. Beide Laschen zusammen als Laschenstrang (auch Seitenband genannt) verbunden bzw. miteinander bestimmungsgemäß in Längsrichtung verbunden bilden die angegebene Laschenbreite. Die Aufteilung der Einzelbreiten kann dabei ggf. von einer hälftigen Aufteilung verschieden sein, d.h. die Trennebene zwischen den Überlappungsbereichen muss nicht mittig sein.

Ergänzend oder gemäß einem unabhängig hiervon erfindungswesentlichen weiteren Aspekt kann es vorteilhaft sein, wenn die Einzelbreiten der Laschen unterschiedlich eingestellt sind, insbesondere die Einzelbreite der Außenlaschen geringfügig geringer eingestellt ist als die Einzelbreite der Innenlaschen. Hierdurch können bei gleichbleibender Laschenbreite des Laschenstrangs höhere Festigkeiten des Laschenstrangs erzielt werden. Somit kann die Trennebene zwischen den verbundenen Überlappungsbereichen bevorzugt leicht seitlich nach außen versetzt liegen, bzw. die Außenlaschen somit können eine geringere Wandstärke haben als die Innenlaschen. So kann die Einzelbreite der Außenlaschen beispielsweise nur ca. 80% oder weniger der Einzelbreite der Innenlaschen betragen. Es kann vorzugsweise eine Aufteilung der Laschenbreite gewählt sein, bei welcher die Einzelbreite der Außenlaschen ≤ 45% der Laschenbreite des Laschenstrangs beträgt, und somit die Einzelbreite der Innenlaschen ≥ 55% der Laschenbreite des Laschenstrangs.

Eine bei gegebener Kettenteilung relativ dünnwandige Laschenbreite absolut betrachtet, aber insbesondere im Verhältnis zur Laschenhöhe, reduziert das Längengewicht der Kette und optimiert insbesondere das Verhältnis vom nutzbaren Innenquerschnitt zum Außenquerschnitt, d.h. erzielt eine optimierte Nutzung des Bauraums für die Leitungsführung.

In einer vorteilhaften Ausführungsform haben die Anschlagvorsprünge und die Anschlagtaschen im Längsschnitt der Laschen senkrecht zur Schwenkachse betrachtet eine Kontur, insbesondere geometrische Außenkontur, welche jeweils im Wesentlichen einem Kreisringsegment entspricht.

In einer vorteilhaften Ausführungsform bilden die Anschlagflächen der Anschlagvorsprünge sowie die Gegenanschlagflächen der Anschlagtaschen zumindest überwiegend ebene oder exakt ebene Flächen, welche vorzugsweise zur Verschwenkebene im Wesentlichen senkrecht liegen. Die anschlagwirksamen Flächen können demgegenüber jedoch auch in einem geringfügigen Winkel hergestellt und ausgerichtet sein, z.B. leicht schräg bzw. hinterschnitten, sodass im Anschlag bzw. bei Belastung der Kettenlaschen die Flächen ein Ineinanderziehen der Anschlagvorsprünge in die Anschlagtaschen bewirken, wie aus WO 95/04231 A1 bekannt, sodass die Laschen dadurch seitlich stabil aneinander gehalten bleiben auch bei hohen Zugkräften. Der Winkel - bezüglich der zur Verschwenkebene Senkrechten tangential an der anschlagwirksamen Fläche - wird dabei spitz und typisch ≤ 10° sein. Die Verschwenkebene ist dabei in Bezug auf die jeweilige Schwenkachse als eine zur Schwenkachse senkrechte Ebene zu verstehen.

In Bezug auf eine Kreisringsegment-Kontur können die anschlagwirksamen Flächen insbesondere parallel zu einem Radius durch die Schwenkachse verlaufend aber in Umfangsrichtung versetzt angeordnet sein, d.h. nicht exakt koplanar zu einem Radius der Kreisbewegung bzw. zur Schwenkachse ausgerichtet sein, sondern parallel hierzu versetzt. Dies kann ebenfalls günstigere Kraftverhältnisse und Hebelwirkungen, z.B. zur Entlastung der Schwenkgelenke von Zug- und/oder Schubkräften und/oder von Scherkräften im freitragenden Obertrum, ermöglichen.

Die Anschlagflächen und die Gegenanschlagflächen bilden bevorzugt überwiegend ebene Flächen, die ggf. parallel versetzt zu einem in Umfangsrichtung nächstliegenden Radius durch die Schwenkachse angeordnet sein können.

Grundsätzlich haben die Anschlagvorsprünge der einen Lasche ein untereinander im Wesentlichen identisches Winkelmaß der Sperrweite zwischen ihren Anschlagflächen. Entsprechend haben die Anschlagtaschen der anderen Lasche ein untereinander im Wesentlichen identisches Winkelmaß der Öffnungsweite zwischen ihren Gegenanschlagflächen. Die Gestaltung des Anschlagsystems, insbesondere die Anordnung der Anschlagvorsprünge und -taschen, kann dabei insbesondere in sich einer Drehsymmetrie, insbesondere mit n=3, um die Schwenkachse entsprechen. In einer Verschwenkebene betrachtet sind die Grundflächen der Anschlagtaschen untereinander somit gleich in einem betrachteten Überlappungsbereich, insbesondere auch bei allen Kettengliedern einer betrachteten Energieführungskette. Auch die Grundflächen der Anschlagvorsprünge in einem gegebenen Überlappungsbereich sind somit untereinander gleich, können jedoch über die Länge der Energieführungskette erfindungsgemäß unterschiedlich dimensioniert sein, insbesondere zur Realisierung von Längsabschnitten mit verschiedenen Radien, insbesondere wahlweise rückwärtigem Biegeradius.

In einer vorteilhaften Ausführungsform sind die Anschlagtaschen drehsymmetrisch bzw. in Umfangsrichtung gleichverteilt um die jeweilige Schwenkachse vorgesehen, vorzugsweise mit einer 120° Drehsymmetrie bezüglich der Schwenkachse.

In einer vorteilhaften Ausführungsform ist zur Schwenkwinkelbegrenzung jeweils eine Anschlaganordnung mit genau drei Anschlagvorsprüngen in jedem Überlappungsbereich der einen Lasche vorgesehen. Entsprechend ist zur Schwenkwinkelbegrenzung jeweils eine Anschlaganordnung mit genau drei korrespondierenden Anschlagtaschen in jedem Überlappungsbereich der anderen Lasche vorgesehen, welche korrespondierend zu den Anschlagvorsprüngen gestaltet sind.

Bei einem mit dem Laschenkörper einteilig ausgeführten bzw. integrierten Anschlagsystem greift insbesondere je genau ein Anschlagvorsprung in genau eine korrespondierende Anschlagtasche.

In einer vorteilhaften Ausführungsform sind die Anschlagvorsprünge jeweils nur an den Außenlaschen vorgesehen und die korrespondierenden Taschen jeweils nur an den Innenlaschen vorgesehen.

Die vorliegende Erfindung ist besonders vorteilhaft, aber nicht ausschließlich, kombiniert mit einer Gestaltung der Außenlasche (oder Innenlasche) der Art bzw. dem Prinzip nach WO 98/46906 A1 anwendbar. Dabei ist vorteilhaft, wenn die Außenlaschen jeweils in jedem ihrer äußeren Überlappungsbereiche eine Anschlaganordnung mit genau drei Anschlagvorsprüngen aufweisen und die Außenlaschen dabei bezüglich einer ersten Symmetrieebene, welche in Längsrichtung und durch beide Schwenkachsen verläuft, im Wesentlichen (aber nicht exakt) spiegelsymmetrisch ausgeführt sind. Gegebenenfalls abweichend von dieser Spiegelsymmetrie können die Anschläge an Innen- oder Außenlasche so unsymmetrisch in Bezug auf die in Kettenlängsrichtung verlaufende Mittelachse als Spiegelachse angeordnet sein, dass je nach Orientierung der Außenlasche in Bezug auf die Längsrichtung die durch die Anschläge definierten Begrenzungswinkel der Abwinkelung in Bezug auf die Kettenlängsrichtung unterschiedlich sind. Unter den beiden Orientierungen der Kettenlasche werden die Positionen der Lasche in Kettenlängsrichtung verstanden, die durch 180°-Drehung um die quer zur Kettenlängsrichtung verlaufende Mittelachse der Lasche ineinander übergehen. Somit kann durch entsprechende Drehung der Außenlaschen ein anderer Verlauf, insbesondere eine Vorspannung des bewegten Trums bzw. Obertrums für Anwendungen mit freitragendem Obertrum eingestellt werden. Es wird insoweit die diesbezügliche Lehre aus WO 98/46906 A1 vorliegend einbezogen.

Bei derartig, in Bezug auf die in Kettenlängsrichtung verlaufende Mittelebene als Spiegelebene, im Wesentlichen symmetrischen Außenlaschen weisen diese vorteilhaft genau einen bzw. nur einen in dieser ersten Symmetrieebene liegenden Anschlagvorsprung auf. Dieser Anschlagvorsprung kann dem in Längsrichtung mittleren Bereich der Außenlasche zugewandt, oder dem in Längsrichtung mittleren Bereich der Außenlasche abgewandt angeordnet sein, wobei jede der beiden Anordnungen eigene Vorteile haben kann, z.B. hinsichtlich Kraftfluss oder Steifigkeiten. Die beiden weiteren Anschlagvorsprünge können dann ggf. in etwa symmetrisch zur ersten Ebene liegen.

Es ist vorteilhaft, wenn die Anschlagflächen und die Gegenanschlagflächen zumindest überwiegend ebene Flächen bilden. Dabei ist es für die Steifigkeit bzw. zur Entlastung der Schwenkachse günstig, wenn sich die beiden Anschlagflächen eines Anschlagvorsprungs und/oder die beiden Gegenanschlagflächen einer Anschlagtasche jeweils in einer gedachten Scheitelachse schneiden, die möglichst zentral in Bezug auf die Schwenkachse innerhalb des Überlappungsbereichs liegt. Die Flächen sind vorzugsweise so ausgerichtet, dass sie sich in einer gedachten Scheitelachse schneiden, die innerhalb eines Bereichs, durch einen gedachten Inkreis radial innen an der Kreisringsegment-Kontur der Anschlagtaschen liegt. Dabei kann besonders vorteilhaft vorgesehen sein, dass die Gegenanschlagflächen einer Anschlagtasche sich jeweils in einer gedachten Scheitelachse schneiden, die innerhalb eines Bereichs der durch einen kreisringförmigen als Gelenkzapfen dienenden Gelenkvorsprung bzw. einer kreisringförmigen als Gelenkaufnahme dienenden Vertiefung zur Aufnahme eines korrespondierenden Gelenkvorsprungs der gegenüberliegenden Lasche liegt. Die Anschlagflächen eines Anschlagvorsprungs können dazu korrespondierend bzw. passend für flächiges Anschlagen ausgerichtet sein.

Insbesondere für eine hohe Festigkeit ist es vorteilhaft, wenn die Lasche, vorzugsweise Innenlasche, zwischen zwei in Umfangsrichtung um die Schwenkachse aufeinanderfolgenden Anschlagtaschen jeweils eine nach außen aufweitende, vorzugsweise im Längsschnitt im Wesentlichen V-förmige Materialbrücke bildet, welche an ihrer schmalsten Stelle eine Mindestbogenabmessung ≥ 3mm, insbesondere ≥ 4mm, gemessen in Umfangsrichtung hat. Dabei kann die Lasche vorzugsweise einen umlaufenden Verstärkungsring bilden, in welchen die Materialbrücken mit ihren schmalsten Stellen nach radial innen übergehen. Dabei können wiederum zumindest diese Übergänge von Materialbrücke zum Verstärkungsring vorzugsweise jeweils gerundet ausgeführt sein.

Eine besonders robuste Gelenkverbindung kann erzielt werden, indem die Innenlasche einen radial inneren Gelenkring aufweist und zwischen Gelenkring und Verstärkungsring eine als Gelenkaufnahme dienende Vertiefung zur Aufnahme eines korrespondierenden kreisringförmigen Gelenkvorsprungs als Gelenkzapfen der gegenüberliegenden Lasche aufweist, und indem die Außenlasche einen kreisringförmigen als Gelenkzapfen dienenden Gelenkvorsprung aufweist, zur Zusammenwirkung mit der Gelenkaufnahme der Innenlasche.

Hierbei kann zur Realisierung möglichst schmal bauender Laschen vorgesehen sei, dass Gelenkvorsprung bzw. Gelenkzapfen der Außenlasche und Anschlagvorsprünge der Außenlasche vorzugsweise um ein im Wesentlichen identisches Maß nach innen vorstehen und in einer Ebene parallel zur Verschwenkebene bündig enden.

Eine günstige Ausnutzung des Materialvolumens der Laschen im Überlappungsbereich ergibt sich, wenn die Anschlagtaschen eine Öffnungshöhe radial zur Schwenkachse aufweisen, welche mindestens 15%, vorzugsweise mindestens 20% der Gesamthöhe der Lasche senkrecht zur Längsrichtung beträgt. Die Anschlagvorsprünge haben dabei bevorzugt eine entsprechende lediglich um Bewegungsspiel reduzierte Radialabmessung radial zur Schwenkachse. Die Anschlagvorsprünge können dabei auf ihrer Kreisbewegung beim Schwenken innerhalb der Anschlagtaschen geführt gehalten bzw. gleitlagerartig gehalten sein.

Die Erfindung ermöglicht insbesondere Anwendungen, bei welchen die Energieführungskette zumindest zwei Längsabschnitte umfasst, mit mindestens einem ersten Längsabschnitt ohne rückwärtigen Biegeradius und mindestens einem zweiten Längsabschnitt mit rückwärtigem Biegeradius. In solchen Anwendungen hat die Energieführungskette einen ersten Längsabschnitt, in welchem die Energieführungskette keinen rückwärtigen Biegeradius aufweist. In diesem Längsabschnitt ist ein erster Typ bzw. eine erste Bauart der einen Laschen, vorzugsweise ein erster Typ der Außenlaschen, mit einem ersten größeren Winkelmaß (α1) der Sperrweite der Anschlagvorsprünge vorgesehen. In einem zweiten Längsabschnitt, in welchem die Energieführungskette einen rückwärtigen Biegeradius aufweist, ist ein zweiter Typ bzw. eine zweite Bauart der einen Laschen, vorzugsweise ein zweiter Typ der Außenlaschen, vorgesehen mit einem zweiten kleineren Winkelmaß (α2) der Sperrweite der Anschlagvorsprünge. Das zweite Winkelmaß (α2) ist dabei deutlich kleiner als das erste Winkelmaß (α1), sodass der zweite Typ Laschen, vorzugsweise der Außenlaschen, gegenüber den anderen Laschen, insbesondere Innenlaschen, jeweils zusätzlich in einer entgegengesetzten rückwärtigen Schwenkrichtung schwenkbar ist.

Es können jeweils mehrere Abschnitte mit unterschiedlichen Krümmungsrichtungen und -radien vorgehen werden, wozu dann lediglich die ersten Laschen, insbesondere Außenlaschen, in ihrer Bauart hinsichtlich Sperrweite der Anschlagvorsprünge angepasst bzw. wahlweise passend dimensioniert gewählt sind. Die zweiten Laschen, insbesondere Außenlaschen, können dabei jedoch über die gesamte Kettenlänge der Energieführungskette ggf. gleiche Bauart haben, insbesondere in all diesen Laschen gleich dimensionierte Anschlagtaschen.

Bei Verwendung von Außenlaschen mit wahlweise dimensionierten Anschlagvorsprüngen wird somit weiterhin eine Identifikation der Abschnitte erleichtert, da der Typ bzw. die Bauart hinsichtlich Schwenkwinkel bzw. Krümmungsradius z.B. mittels Einprägung, von außen leichter ersichtlich gestaltet werden kann.

In einer bevorzugten Gestaltung der Laschen sind einstückig an einem Mittelbereich einer Lasche, insbesondere der Innenlasche, jeweils zwei Haltevorsprünge vorgesehen, die über einen zugehörigen Freiraum vorspringen, in welchen je eine angrenzende weitere Lasche, insbesondere Außenlasche, mit einem sich parallel zur Verschwenkebene erstreckenden, kreisbogenförmigen Führungsbereich zur Seitenstabilisierung eingreifen kann. Dies erlaubt eine erhöhte seitliche Stabilität bzw. Steifigkeit der einzelnen Laschenstränge und somit hohe Belastbarkeit bei Querkräften z.B. für Anwendungen mit um 90° gedrehter, horizontaler Verfahrebene mit Laschensträngen vertikal übereinander. Besonders bevorzugt wird eine entsprechende Gestaltung gemäß WO 2020/152349 A1 verwendet. Hierbei ist jeder Haltevorsprung in Umfangsrichtung um die Schwenkachse begrenzt (α) dimensioniert, sodass der kreisbogenförmige Führungsbereich einer eingreifenden Lasche überwiegend nicht vom Haltevorsprung übergriffen ist bzw. jeder Haltevorsprung ist innerhalb eines von der Längsmittelebene der Lasche halbierten Winkelbereichs < 60°, vorzugsweise ≤ 45°, um die benachbarte Schwenkachse angeordnet.

Eine weitere Reduzierung des Längengewichts kann erzielt werden, wenn die Außenlasche verjüngte Bereiche an ihren Längsenden der Überlappungsbereiche aufweist, in denen die Lasche in Bezug auf ihre Laschenbreite bzw. die Abmessung des Laschenkörpers parallel zur Schwenkachse, eine dünnere Materialdicke aufweist als in ihrem Mittelbereich dazwischen. Hierbei kann zur Erhöhung der Festigkeit, insbesondere in Bezug auf Zug- und Druckkräfte der zwischenliegende Bereich mit gegenüber den verjüngten Bereichen größerer Materialstärke sich in Längsrichtung vorzugsweise über mindestens 80% der Kettenteilung erstrecken. Dieser zwischenliegende Bereich mit gegenüber den verjüngten Bereichen größerer Materialstärke kann dabei auch als Verschleißzulage für seitlich liegende Anwendungen, z.B. bei Kreiskettenanwendungen, dienen. Konstruktiv vorteilhaft ist insbesondere vorgesehen, dass dieser zwischenliegende Bereich mit größerer Materialstärke in Längsrichtung so dimensioniert ist, dass er mindestens 25% des Durchmessers des kreisringförmigen Gelenkzapfen bzw. der Gelenkaufnahme abdeckt. Hierdurch können Kräfte auf die Gelenkverbindung unmittelbar in den Bereich mit größerer Materialstärke eingeleitet werden.

Die erfindungsgemäße Gestaltung der Laschen ist besonders vorteilhaft für Industrieanwendungen mit vergleichsweise groß bauenden Ketten, insbesondere Energieführungsketten mit Laschen-Außenhöhen ≥ 40mm und/oder mit Kettenteilungen ≥ 80mm, wobei die Kettenteilung dem Abstand zwischen den Schwenkachsen entspricht, der bevorzugt aber nicht zwingend bei Außenlaschen und Innenlasche identisch ist. Die erfindungsgemäße Gestaltung der Laschen erlaubt u.a. ein leichteres und damit auch z.B. für höhere Geschwindigkeiten geeignetes Design im Vergleich z.B. zu WO 2020/152349 A1.

Die erfindungsgemäße Gestaltung der Laschen zur Erzielung von rückwärtigen Biegeradien ist für verschiedene Anwendungen bzw. Verwendungen vorteilhaft einsetzbar, z.B. wenn die Energieführungskette für eine Kreisbewegung verwendet wird oder wenn die Energieführungskette für eine Vertikalbewegung mit mehreren zick-zack-förmig übereinander ablegbaren ersten gestreckten Längenabschnitten, insbesondere ohne rückwärtigen Biegeradius, genutzt wird, die jeweils mittels zweiter Abschnitte mit rückwärtigem Biegeradius verbunden sind.

Die Erfindung betrifft neben einer Energieführungskette insgesamt auch die einzelnen Kettenlaschen hierfür an sich sowie deren paarweise Verbindung als Laschenpaar.

Das Seitenlaschenpaar für eine Energieführungskette, zeichnet sich aus durch eine erste Lasche, insbesondere Außenlasche, und eine zweite Lasche, insbesondere Innenlasche, jeweils mit den Merkmalen nach einer der vorstehenden Ausführungsformen.

Die Erfindung betrifft ferner auch ein entsprechendes Kettengliedpaar mit zwei derartigen, seitlich gegenüberliegenden Laschenpaaren aus Innen- und Außenlasche, die über mindestens einen Quersteg verbunden sind.

Besonders vorteilhaft anwendbar sind die vorstehenden Ausführungsformen auf Kettenlaschen für Energieketten, die einstückig bzw. einteilig aus einem Kunststoff, vorzugsweise aus einem spritzgussfähigen Thermoplast, insbesondere aus faserverstärktem Thermoplast bzw. technischen Polymer, hergestellt sind.

### ZWEITER ASPEKT

Gemäß einem unabhängigen, für sich als erfindungserheblich angesehenen weiteren Aspekt wird eine Weiterentwicklung gattungsgemäßer Energieführungsketten mit Innen- und Außenlaschen vorgeschlagen, welche die Montage des Laschenstrangs erleichtert und/oder die Seitenstabilität weitergehend erhöht.

Hierbei dient eine gattungsgemäße Energieführungskette zur Führung von Leitungen, wie Schläuchen, Kabeln oder dgl., zwischen zwei Anschlussstellen, mit Kettengliedern, die jeweils zwei gegenüberliegende Laschen, insbesondere aus Kunststoff. Bei zumindest einigen Kettengliedern sind die Laschen über mindestens einen Quersteg miteinander verbunden. Die Energieführungskette hat zwei Laschenstränge jeweils mit in Längsrichtung alternierend aufeinanderfolgenden Innenlaschen und Außenlaschen, wobei die Innenlaschen zwei dem Ketteninneren zugewandte innere Überlappungsbereiche und die Außenlaschen zwei dem Ketteninneren abgewandte äußere Überlappungsbereiche aufweisen. Von jeweils zwei im Laschenstrang in Längsrichtung benachbarten Laschen, die eine Lasche mit einem ihrer Überlappungsbereiche einen entsprechend komplementären Überlappungsbereich der anderen Lasche überlappt, sind die beiden Laschen jeweils gelenkig in einer Ebene um eine Schwenkachse verschwenkbar miteinander verbunden.

Zur Schwenkwinkelbegrenzung sind gattungsgemäß Anschlagvorsprünge im Überlappungsbereich der einen Lasche vorgesehen, die in korrespondierende Anschlagtaschen, die im Überlappungsbereich der anderen Lasche vorgesehen sind, greifen.

Gemäß dem unabhängigen zweiten Aspekt wird vorgeschlagen, dass zumindest ein Anschlagvorsprung ein radial vorstehendes Halteelement aufweist und zumindest eine korrespondierende Anschlagtasche ein radial vorstehendes Rückhalteelement aufweist, wobei Halteelement und Rückhalteelement derart zusammenwirken, dass sie verbundene Laschen seitlich aneinander halten.

Durch diese einfache Zusatzmaßnahme kann die Montage der Laschenstränge erheblich vereinfacht werden. Die Gestaltung steigert davon unabhängig auch die Seitenstabilität im Betrieb, was insbesondere aber nicht allein in Kombination mit schmal bauenden Laschen nach dem ersten Aspekt vorteilhaft ist.

In einer Ausführungsform sind haben je genau zwei Anschlagvorsprünge, insbesondere nur zwei der genau drei Anschlagvorsprünge, jeweils ein radial vorstehendes Halteelement. Dementsprechend haben die beiden korrespondierenden, mit den zwei Anschlagvorsprüngen jeweils zusammenwirkenden Anschlagtaschen ein radial vorstehendes, zusammenwirkendes Rückhalteelement.

In einer Ausführungsform hat jedes Halteelement und jedes Rückhalteelement jeweils am radial äußeren Umfangsbereich des Anschlagvorsprungs bzw. der Anschlagtasche vorgesehen ist.

Konstruktiv vorteilhaft ist wenn Halteelement und Rückhalteelement jeweils umfänglich bzw. bogenförmig erstreckt verläuft, sodass ein Eingriff über einen bestimmten Schwenkwinkelbereich erzielt wird.

In einer einfach herzustellenden Ausführungsform können die bzw. jedes der Halteelemente und Rückhalteelemente jeweils als radial vorstehende Rastnase ausgeführt sein, insbesondere mit einer Einführschräge schräg zur Verschwenkebene und einer Rastfläche parallel zur Verschwenkebene, und vorzugsweise mit dem jeweils zusammenwirkenden Element beim Zusammenfügen der Laschen lösbar verrastbar ist. So kann z.B. eine einfach zu verbindende und wieder lösbare Schnappverbindung bzw. Verrastung der Laschen miteinander erzielt werden.

In einer Ausführungsform ist vorgesehen, dass zwei Halteelemente an Anschlagvorsprüngen der Außenlasche symmetrisch zu einer Längsmittelebene vorgesehen sind, und zwei Rückhalteelemente in korrespondierenden Anschlagtaschen der Innenasche asymmetrisch zu einer Längsmittelebene vorgesehen sind.

Ergänzend oder alternativ sind zwei Rückhalteelemente in korrespondierenden Anschlagtaschen in Bezug auf die Schwenkachse zueinander winkelversetzt und/oder mit unterschiedlichem Winkelmass um die Schwenkachse ausgeführt. Dies ermöglicht, u.a. dass Halteelemente und Rückhalteelemente jeweils verbundene Laschen zumindest über einen überwiegenden Anteil des Verschwenkwinkels seitlich aneinander halten, indem ihre Zusammenwirkung sich je nach Winkelstellung der Laschen ergibt.

Der erste und der zweite Aspekt können mit eigenständigen Vorteilen unabhängig voneinander oder auch besonders vorteilhaft in Kombination realisiert werden.

Alle vorgenannten und nachfolgend als vorteilhaften erläuterten Merkmale werden für sich genommen bzw. unabhängig, und auch in vorteilhafter Kombination, als erfindungserheblich betrachtet und können somit den Gegenstand einer Teilanmeldung darstellen.

Weitere Merkmale und Vorteile der Erfindung sind - ohne Beschränkung des Schutzumfangs - der nachfolgenden, ausführlicheren Beschreibung bevorzugter Ausführungsbeispiele anhand der beiliegenden Figuren zu entnehmen. Diese zeigen rein beispielhaft:
- **FIG.1A-1B:**: eine Perspektivansicht eines Abschnitts mit zwei Kettengliedern eines ersten Ausführungsbeispiels der Erfindung (FIG.1A), und einen vertikalen Längsschnitt in etwa entlang der Trennebene zwischen den Laschen (FIG.1B) zur Veranschaulichung des Anschlagsystems;
- **FIG.2:**: eine schematische Seitenansicht einer in einer vertikalen Ebene verfahrbaren Energieführungskette mit freitragendem Obertrum (und Vorspannung) zur Veranschaulichung des (normalen bzw. nicht rückwärtigen) Biegeradius im Umlenkbogen;
- **FIG.3A-3B:**: eine Perspektivansicht der Innenseite einer Außenlasche (FIG.3A) und eine Perspektivansicht der Außenseite einer Innenlasche (FIG.3B) zur weiteren Veranschaulichung des Anschlagsystems, jeweils gemäß einer Variante des ersten Ausführungsbeispiels, hier mit kleinerem Biegeradius im Umlenkbogen;
- **FIG.3C-3E:**: ein Abschnitt eines Laschenstrangs mit Innen- und Außenlaschen nach FIG.2A-2B, in Draufsicht (FIG.3C) zur Veranschaulichung der geringen Laschenbreite, sowie in Seitenansicht (FIG.3D) und im vertikalen Längsschnitt in etwa entlang der Trennebene (FIG.3E) zwischen den Laschen zur Veranschaulichung der nominalen Schwenkwinkelbegrenzung (im Umlenkbogen) durch das Anschlagsystem;
- **FIG.4A-4B:**: eine Perspektivansicht der Innenseite einer Außenlasche (FIG.4A) und eine Perspektivansicht der Außenseite einer Innenlasche (FIG.4B) eines weiteren Ausführungsbeispiels, hier mit Biegeradius wie in FIG.3A-3B;
- **FIG.5A-5B:**: ein weiteres Ausführungsbeispiel im vertikalen Längsschnitt in etwa entlang der Trennebene zur Veranschaulichung der zur Veranschaulichung eines Längsabschnitts des Laschenstrangs mit normaler Schwenkwinkelbegrenzung (FIG.5A) und einer bestimmungsgemäß rückwärtigen entgegengesetzten Schwenkbarkeit für einen rückwärtigen Biegeradius (FIG.5B) mit im Wesentlichen gleichen Schwenkwinkel;
- **FIG.6:**: als erste beispielhafte Anwendung eine schematische Draufsicht auf eine Kreiskettenanwendung mit einer erfindungsgemäßen Energieführungskette für Kreisbewegung;
- **FIG.7A-7B:**: als zweite beispielhafte Anwendung eine schematische Seitenansicht einer erfindungsgemäßen Energieführungskette für Vertikalbewegungen; und
- **FIG.8A-8F:**: eine Weiterentwicklung gemäß einem zweiten unabhängigen Aspekt der Erfindung, welche ein bevorzugte Ausführungsform mit Verrastfunktion am integrierten Anschlagsystem zeigt, im Längsschnitt (FIG.8A, entsprechend Schnittlinien A-A in der Frontansicht FIG.8E), in einem Querschnitt (FIG.8B, entsprechend Schnittlinie B-B in der Seitenansicht FIG.8F), in Perspektivansichten von Haltelement (FIG.8C) und Gegenhaltelement (FIG.8D) sowie in Frontansicht (FIG.8E) und Seitenansicht (FIG.8F), eines Seitenlaschenpaars aus Außen- und Innenlasche.

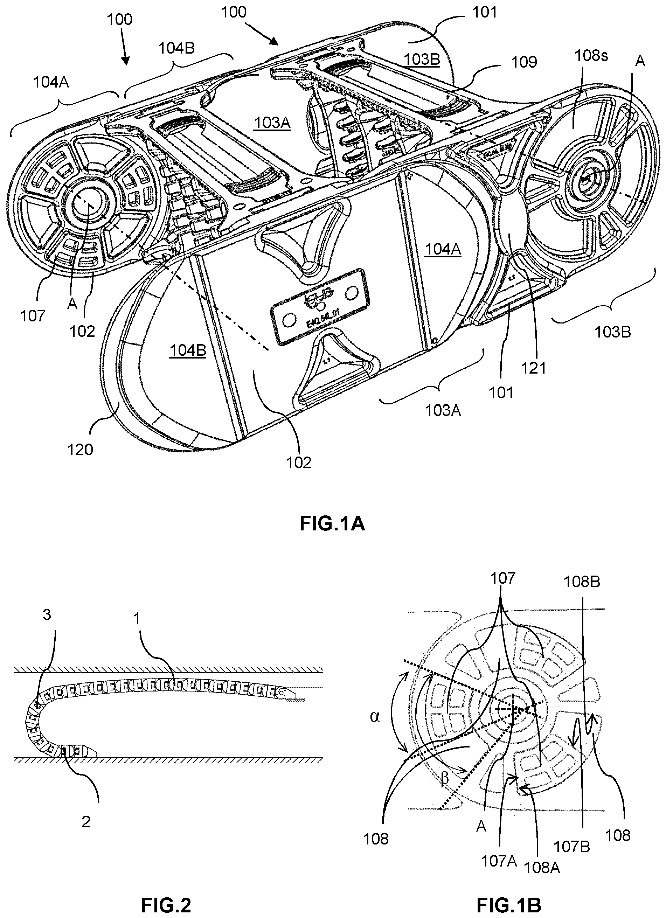

FIG.1A zeigt zwei Kettenglieder 100 als Grundbestandteil einer Energieführungskette zur Führung von Versorgungsleitungen (nicht gezeigt) mit mindestens zwei Trumen, die durch einen Umlenkbogen verbunden sind, und anwendungsabhängig verfahrbar sind (vgl. FIG.2, FIG.6 oder FIG.7).

Die Kettenglieder 100 sind aus in Kettenlängsrichtung alternierend aufeinanderfolgenden Innenlaschen 101 und Außenlaschen 102 zusammengesetzt. Jeweils zwei seitlich gegenüberliegende Innenlaschen 101 und Außenlaschen 102 sind bei vollstegiger Bauweise mit je zwei Querstegen 109 an allen Kettenglieder 100 miteinander verbunden, Querstege 109 können jedoch auch an nur jedem zweiten Kettenglied 100 vorgesehen werden.

Die Innenlaschen 101 haben zwei dem Ketteninneren bzw. Aufnahmeraum im Kettenglied 100 zugewandte innere Überlappungsbereiche 103A, 103B. Die Außenlaschen 102 haben zwei dem Ketteninneren abgewandte, äußere Überlappungsbereiche 104A, 104B. Betrachtet man jeweils zwei im Laschenstrang in Längsrichtung verbundene Laschen, überlappt die eine Lasche 101 bzw. 102 mit einem ihrer Überlappungsbereiche 103A, 103B bzw. 104A, 104B einen entsprechend komplementären Überlappungsbereich 104A, 104B bzw. 103A, 103B der anderen Lasche 102 bzw. 101.

Mittels geeigneter Gelenkverbindungen (s. unten) sind die beiden Laschen 101, 102 jeweils gelenkig in einer Ebene um eine Schwenkachse A verschwenkbar miteinander verbunden, sodass die Kettenglieder 100 gegeneinander verschwenkt werden können um einen Umlenkbogen 3 (vgl. FIG.2) zu bilden.

Die Bauweise der Kettenglieder beruht hinsichtlich Merkmalen, welche nicht die Seitenlaschen an sich betreffen auf der Bauweise aus WO 2020/152349 A1, auf deren Lehre verwiesen wird und deren Inhalt zur Verkürzung insoweit hier einbezogen ist, z.B. bezüglich an einem Mittelbereich 105 der Innenlasche 101 vorgesehenen zwei Haltevorsprüngen 121, die über einen Freiraum vorspringen, in welchen je eine angrenzende Außenlaschen 102 mit einem sich parallel zur Verschwenkebene erstreckenden, kreisbogenförmigen Führungsbereich 120 zur Seitenstabilisierung eingreifen.

Auch die Bauweise der von Hand d.h. werkzeugfrei lösbaren Querstege 109 und die hierfür an den oberen und unteren Schmalseiten der Laschen 101 bzw. 102 vorgesehenen Befestigungsvorsprünge sind bekannt, hierzu wird zur Verkürzung auf die Lehre aus WO 2020/152263 A1 verwiesen, und deren Inhalt insoweit hier, insbesondere betreffend die Bauweise und Befestigung der Querstege 109, einbezogen ist. Weiterhin zeigt FIG.1A eine Innenaufteilung, die an sich bekannter Art sein kann, es sei zur Verkürzung auf die Lehre aus WO 2022/049091 A1 verwiesen, deren Inhalt insoweit betreffend die Innenaufteilung hier einbezogen ist.

Die Innenlaschen 101 und Außenlaschen 102 sind einteilige bzw. einstückige Laschen aus Kunststoff, insbesondere aus einem faserverstärkten technischen Polymer, die in Spritzgusstechnik hergestellt sind. Nachfolgend werden insbesondere Unterschiede zur Lehre aus WO 2020/152349 A1 erörtert, vor allem betreffend das integrierte Anschlagsystem, welches einteilig mit den Innenlaschen 101 und Außenlaschen 102 hergestellt ist.

Zur Schwenkwinkelbegrenzung haben die erfindungsgemäßen Außenlaschen 102 jeweils genau drei Anschlagvorsprünge 107 jeweils innenseitig in jedem ihrer Überlappungsbereiche 104A, 104B. Die Anschlagvorsprünge 107 sind einteilig mit dem Laschenkörper hergestellt, z.B. im Spritzgussverfahren und stehen nach innen zum Aufnahmeraum des Kettenglieds vor.

In beiden Überlappungsbereichen 103A, 103B der Innenlasche 101 sind jeweils genau drei korrespondierende Anschlagtaschen 108, als Vertiefungen bzw. Ausnehmungen bei der Herstellung vorgeformt bzw. ausgespart durch entsprechende Formwerkzeugeinsätze. Die Anschlagtaschen 108 sind korrespondierend zu den Anschlagvorsprüngen 107 gestaltet und so dimensioniert, sodass die Anschlagvorsprünge 107 schwenkbar in den Anschlagtaschen 108 aufgenommen sind.

Die Anschlagvorsprünge 107 und die Anschlagtaschen 108 sind jeweils gemäß einer Drehsymmetrie mit N=3 d.h. um 120° drehsymmetrisch um die jeweilige Schwenkachse A angeordnet. Im montierten Zustand des Laschenstrangs greifen die Anschlagvorsprünge 107 in die Anschlagtaschen 108 und dienen zur Schwenkwinkelbegrenzung.

Wie aus FIG.1B ersichtlich wirken die äußeren Anschlagflächen 107A, 107B eines Anschlagvorsprungs 107 jeweils mit Gegenanschlagflächen 108A, 108B einer Anschlagtasche 108 zur Schwenkwinkelbegrenzung zusammen, jeweils in beide Schwenkrichtungen, z.B. in der Strecklage der Trume 1, 2 oder im Umlenkbogen 3 (FIG.2). Dabei kommt eine Anschlagfläche 107A, 107B eines Anschlagvorsprungs 107 jeweils mit der entsprechenden bzw. korrespondierenden Gegenanschlagfläche 108A, 108B einer Anschlagtasche 108 zum Anliegen, sodass der maximal zulässige Verschwenkwinkel der Kettenglieder zueinander in beide Schwenkrichtungen vorgegeben ist.

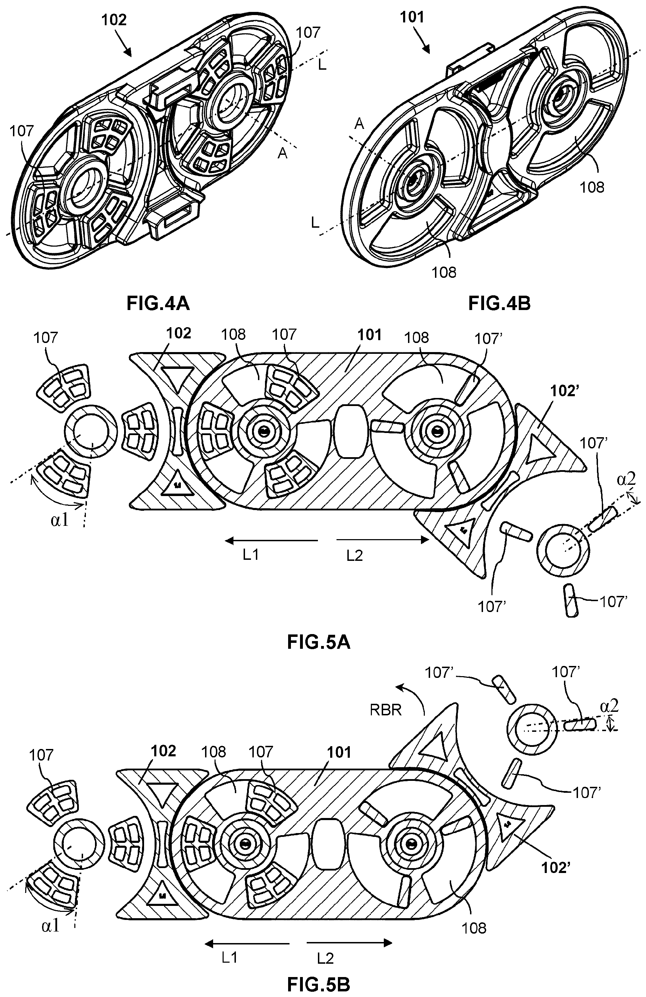

Wie aus FIG.1B ersichtlich, haben alle drei Anschlagvorsprünge eine im Wesentlichen (ggf. bis auf wenige Zehntel) identische Sperrweite zwischen ihren Anschlagflächen 107A, 107B mit einem Winkelmaß der Sperrweite das mindestens 40° (α≥ 40°) beträgt, sofern kein rückwärtiger Biegeradius vorgesehen ist, wie z.B. in FIG.5A-5B gezeigt. Die drei Anschlagtaschen 108 haben eine, an den gewünschten Schwenkwinkel angepasste Öffnungsweite zwischen ihren Gegenanschlagflächen 108A, 108B, mit einem Winkelmaß der Öffnungsweite, wobei das Winkelmaß der Öffnungsweite bevorzugt jeweils mindestens 55° (β ≥ 55°) beträgt, je nach gewünschtem Krümmungsradius im Umlenkbogen 3 (vgl. FIG.2). Erfindungsgemäß ist dabei vorgesehen, dass für alle Baureihen ohne rückwärtigen Biegeradius, das Winkelmaß α der Sperrweite jedes Anschlagvorsprungs 107 mindestens 50% des Winkelmaß β der Öffnungsweite einer Anschlagtasche 108 beträgt, wie in FIG.1B beispielhaft veranschaulicht.

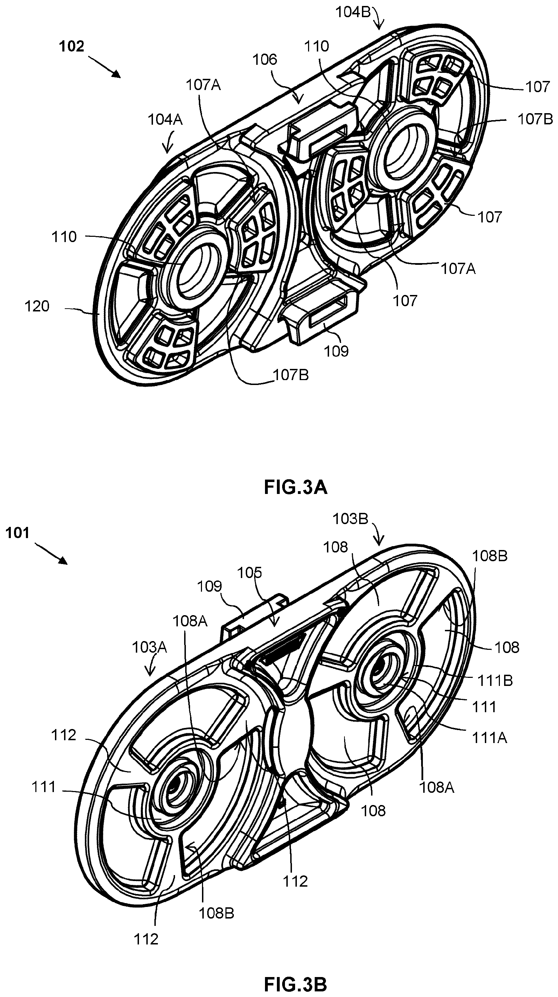

FIG.3A-3B zeigen eine bevorzugte Geometrie des integrierten Anschlagsystems aus Anschlagvorsprüngen 107 an der Innenseite der Außenlaschen 102 und Anschlagtaschen 108 an der Außenseite der Innenlaschen 101. Die Anschlagvorsprünge 107 und die Anschlagtaschen 108 haben im Längsschnitt der Laschen senkrecht zur Schwenkachse A - wie in FIG.1B dargestellt - eine Kontur, welche jeweils im Wesentlichen einem Kreisringsegment entspricht und sind rotationssymmetrisch bzw. drehsymmetrisch bzw. in Umfangsrichtung gleichverteilt um die jeweilige Schwenkachse A angeordnet. Die Anschlagvorsprünge 107 der Außenlasche 102 haben ein untereinander im Wesentlichen identisches Winkelmaß der Sperrweite α zwischen ihren Anschlagflächen 107A, 107B (vgl. FIG.1B). Die Anschlagtaschen 108 der Innenlasche 101 haben ein untereinander im Wesentlichen identisches Winkelmaß der Öffnungsweite β zwischen ihren Gegenanschlagflächen 107A, 107B (vgl. FIG.1B), wie aus FIG.3A-3B ersichtlich. Die Anschlagflächen 107A, 107B der Anschlagvorsprünge 107 sowie die Gegenanschlagflächen 108A, 108B der Anschlagtaschen 108 bilden dabei jeweils eine überwiegend ebene Fläche bilden, welche zur Verschwenkebene bzw. zur Schwenkachse A im Wesentlichen senkrecht liegt, oder ggf. in einem geringen spitzen Winkel, sodass ein Aneinanderziehen der Laschen 101, 102 im Anschlag bewirkt wird.

Wie aus den FIG.3A-3B weiter zu sehen hat das integrierte Anschlagsystem zur Schwenkwinkelbegrenzung jeweils eine Anordnung mit genau drei Anschlagvorsprüngen 107 in jedem Überlappungsbereich der Außenlasche 102 und dementsprechend eine Anschlaganordnung mit genau drei korrespondierenden Anschlagtaschen 108 in jedem Überlappungsbereich der Innenlasche 101. Dabei greift im montierten Zustand je genau ein Anschlagvorsprung 107 in genau eine korrespondierende Anschlagtasche 108, und es sind keine sonstigen separaten Bauteile, wie Radieneinsätzen oder Radienscheiben, zur Vorgabe ausgewählter Radien, im Anschlagsystem vorgesehen.

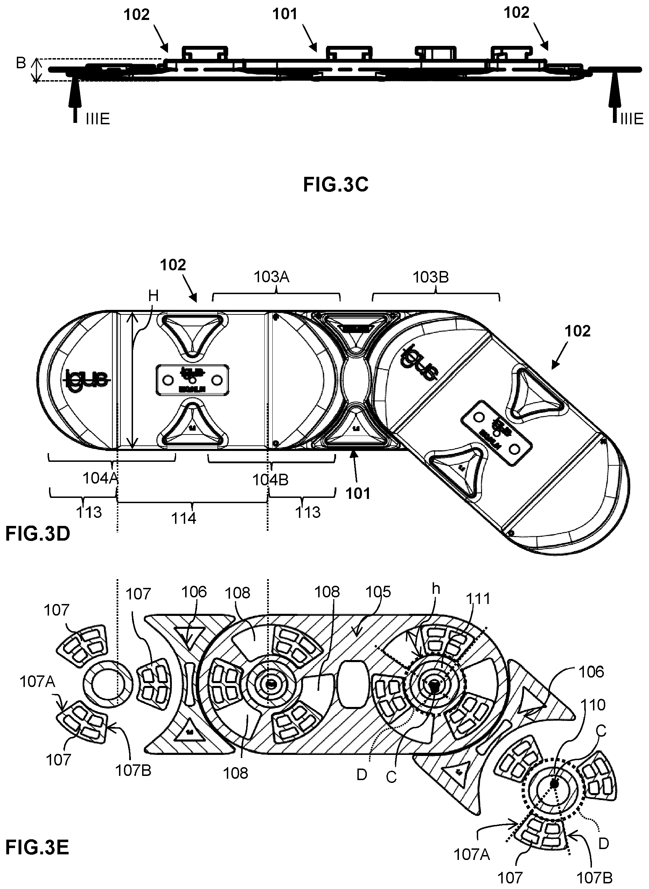

FIG.3C veranschaulicht die schmal bauende Laschenbreite B des Laschenstrangs aus verbundenen Innenlaschen 101 und Außenlaschen 102, hier gezeigt mit einem Abschnitt aus einer Innenlasche 101 und zwei Außenlaschen 102 in Draufsicht. Die Laschenbreite B des Laschenstrangs, beträgt gemessen in Richtung parallel zur Schwenkachse A, maximal 25mm beträgt, bevorzugt ≤ 20mm, besonders bevorzugt ≤ 16mm. Dabei beträgt vorzugsweise das Verhältnis B/H der Laschenbreite B zur Außenhöhe H (vgl. FIG.3D) jeweils ≤ 20%, besonders bevorzugt ≤ 18%, wobei dieses Verhältnis ggf. von der Baureihe bzw. gewählten Bauhöhe abhängig ist.

FIG.3D-3E zeigen weiterhin, anhand gestrichelter Linien, dass die Außenlasche 102 in verjüngten Bereichen 113 an Längsenden des Überlappungsbereichs 104A, 104B jeweils in Bezug auf ihre Laschenbreite eine dünnere Materialdicke aufweist als in ihrem Mittelbereich 106 dazwischen. Dazwischen liegt ein Bereich 114 mit gegenüber den verjüngten Bereichen 113 größerer Materialstärke. Dieser Bereich 114 erstreckt sich in Längsrichtung L vorzugsweise über mindestens 80% der Kettenteilung und/oder deckt insbesondere mindestens 25% des Durchmessers des kreisringförmigen Gelenkzapfens bzw. Gelenkvorsprungs 110 ab. Hierdurch wird bei dünnen Laschen 102 die Stabilität weiter erhöht.

Die FIG.3E zeigt einen Längsschnitt durch die Laschen aus FIG.3C entsprechend Schnittlinie IIIE-IIIE. Wie hier zu sehen sind die beiden Anschlagflächen 107A, 107B eines Anschlagvorsprungs 107 jeweils bei allen Anschlagvorsprüngen 107 so ausgereichtet, dass die im Wesentlichen ebenen Anschlagflächen 107A, 107B sind in einer gedachten Scheitelachse C (vgl. in FIG.3E, senkrecht zur Zeichnungsebene) schneiden die innerhalb des entsprechenden Überlappungsbereichs 104A, 104B liegt, nämlich vorzugsweise innerhalb eines Bereichs, durch einen gedachten Inkreis D der radial innen an den Kreisringsegment-Konturen der Anschlagvorsprünge 107 bzw. analog der Anschlagtaschen 108 liegt. Der Inkreis D ist in FIG.3E schematisch gestrichelt zum rechten Laschenpaar eingezeichnet. Entsprechendes gilt sinngemäß auch für die Gegenanschlagflächen 108A, 108B jeder Anschlagtasche 108. Die drei resultierenden gedachten Scheitelachsen C (nur eine beispielhaft gezeigt) fallen dabei nicht mit der Schwenkachse A zusammen, sondern liegen verteilt um diese. In FIG.3E sind Scheitelachse C und Inkreis D zur Erleichterung je nur an einem Beispiel gezeigt, es gilt aufgrund der Drehsymmetrie jedoch für alle Anschlagvorsprünge 107 und Anschlagtaschen 108 sinngemäß dieselbe Geometrie.

FIG.3A-3B zeigen wiederum am besten Einzelheiten zum Aufbau der bevorzugten Gelenkverbindung welche die Innenlaschen 101 und Außenlaschen 102 jeweils gelenkig in einer Ebene um eine Schwenkachse A verschwenkbar miteinander verbindet, sodass die Kettenglieder 110 gegeneinander schwenkbar sind. Hierzu hat die Innenlasche 101 in jedem ihrer Überlappungsbereiche 103A, 103B einen radial inneren Gelenkring 111A und einen dazu äußeren Verstärkungsring 111B die koaxial zur Schwenkachse A angeordnet sind. Zwischen dem Gelenkring 111A und dem Verstärkungsring 111B ist eine Gelenkaufnahme 111 gebildete dienenden kreisringförmige Vertiefung vorgesehen. Diese Gelenkaufnahme 111 dient zur Aufnahme eines korrespondierenden, kreisringförmigen Gelenkvorsprungs 110 am verbundenen Überlappungsbereich 104A, 104B der gegenüberliegenden Außenlasche 102. Der als Gelenkzapfen dienende ringförmige Gelenkvorsprung 110 ist in der Gelenkaufnahme 111 gleitend drehbar, sodass Gelenkvorsprung 110 und Gelenkaufnahme 111 in Drehgelenk zum Schwenken der verbundenen Laschen 101, 102 gegeneinander um die so definierte Schwenkachse A bilden.

Wie aus FIG.3A-3C weiter ersichtlich stehen der Gelenkvorsprung 110 der Außenlasche 102 und die Anschlagvorsprünge 107 der Außenlasche 102 vorzugsweise um ein im Wesentlichen identisches Maß zum Innenraum bzw. zur Innenlasche 101 seitlich vor, und enden bevorzugt in einer Ebene parallel zur Verschwenkebene bündig (vgl. FIG.3C, links). Weiter zeigen FIG.3A-3C dass die Innenlasche 101, zwischen zwei Anschlagtaschen 108 jeweils eine nach Außen aufweitende Materialbrücke 112 bildet, die hier im Längsschnitt im Wesentlichen V-förmig gestaltet ist. Der von der Innenlasche 101 gebildete umlaufende Verstärkungsring 111B geht dabei im Raum zwischen je zwei Anschlagtaschen 108 in jeweils eine von drei Materialbrücken 112 über. Dort haben die Materialbrücken 112 an ihrer schmalsten Stelle vorzugsweise eine Mindestbogenabmessung ≥ 3mm, insbesondere ≥ 4mm, gemessen Umfangsrichtung bzw. in etwa senkrecht zu einem dort angelegten Radius. Diese Gestaltung verstärkt die Anschläge der Anschlagtaschen 108 einerseits und zugleich aber auch die Gelenkaufnahme 111, insbesondere den Verstärkungsring 111B, durch eine speichenartige Verstrebung zu einem äußeren weiteren Verstärkungsring 111C, der in den bzgl. Materialdicke stärkeren Mittelbereich 105 der übergeht. Die Anschlagtaschen 108 sind zur Innenseite bzw. an der von der Außenlasche 102 abgewandten Grundfläche durch einen durchgehenden plattenartigen Materialbereich der Innenlasche 101 geschlossen, d.h**.** als nur einseitig zur Außenlasche 102 offene Vertiefungen ausgeführt.

Wie aus der Zusammenschau mit FIG.3E weiter hervorgeht sind die beiden Gegenanschlagflächen 108A, 108B einer Anschlagtasche 108 jeweils so ausgerichtet, dass diese sich in der gedachten Scheitelachse C schneiden, welche bei jeder der drei Anschlagtaschen 108 radial innerhalb eines Bereichs liegt, der durch einen kreisringförmigen als Gelenkzapfen dienenden Gelenkvorsprung 110 bzw. entsprechend radial innerhalb der kreisringförmigen als Gelenkaufnahme 111 dienenden Vertiefung der gegenüberliegenden Lasche liegt, da Gelenkvorsprung 110 und Gelenkaufnahme 111 innerhalb des gedachten Inkreis D liegen (vgl. FIG.3E). Diese Gestaltung erhöht weiterhin die Stabilität der Laschenstränge im Betrieb, was insbesondere bei bevorzugt dünnwandigen Laschen 101, 102 vorteilhaft ist.

Wie FIG.1B, FIG.3B und FIG.3E zeigen, haben die mit gleicher Grundfläche in der Schwenkebene gestalteten Anschlagtaschen 108 eine Öffnungshöhe h (vgl. FIG.3E) radial zur Schwenkachse A, welche einen relativ großen Anteil der Bauhöhe der Lasche einnimmt, z.B**.** mindestens 15%, vorzugsweise mindestens 20% der Gesamthöhe H der Lasche 101 senkrecht zur Längsrichtung beträgt. Die die Anschlagvorsprünge 107 haben eine entsprechende, lediglich um Bewegungsspiel reduzierte Radialabmessung radial zur Schwenkachse A.

FIG.4A-4B zeigen eine alternative Ausführungsform mit integrierter Anschlaganordnung. Hierbei haben die Innenlaschen 101 zunächst ebenfalls wie beim Beispiel aus FIG.1-3, in jedem ihrer Überlappungsbereiche 103A, 103B, eine Anschlaganordnung mit jeweils genau drei Anschlagtaschen 108 und die Außenlaschen 102, jeweils in jedem ihrer Überlappungsbereiche 104A, 104B, eine Anschlaganordnung mit genau drei Anschlagvorsprüngen 107. Wie auch beim Beispiel aus FIG.1-3 sind die Außenlaschen 102 bezüglich einer ersten Symmetrieebene, welche in Längsrichtung und durch beide Schwenkachsen A verläuft, im Wesentlichen spiegelsymmetrisch ausgeführt, ggf. mit leichter Asymmetrie zur wahlweise Einstellung einer Vorspannung des Obertrums 1 (vgl. FIG.2).

Der Unterschied der Ausführungsform in FIG.4A-4B besteht darin, dass die Außenlaschen 102 beim Beispiel aus FIG.1-3 einen in der ersten Symmetrieebene liegenden Anschlagvorsprung 107 aufweisen, welcher dem in Längsrichtung L mittleren Bereich 105 der Außenlasche 107 zugewandt ist. Beim Beispiel aus FIG.4A-4B haben die Außenlaschen 102 einen in der ersten Symmetrieebene liegenden Anschlagvorsprung 107 der jeweils außen im Endbereich des Überlappungsbereichs 103A, 103B, d.h. vom in Längsrichtung L betrachtet mittleren Bereich 105 der Außenlasche 102 abgewandt ist. Die erste Symmetrieebene wird dabei von der Längsrichtung L und den parallelen Schwenkachsen A aufgespannt bzw. durch die Schwenkachsen A definiert. Entsprechend sind die drei Anschlagtaschen 108 der Innenlaschen 101 im Beispiel aus FIG.4A-4B um die Schwenkachse korrespondierend verteilt, sodass der gewünschte Schwenkwinkel, insbesondere für den Umlenkbogen 3 (FIG.2) erzielt wird. Im Übrigen sind die Innenlaschen 101 und Außenlaschen 102 im Beispiel aus FIG.4A-4B mit gleichen Merkmalen versehen wie diejenigen im Beispiel aus FIG.1-3.

Anhand der FIG.5A-5B wird ein wesentlicher Vorteil des ersten Aspekts der Erfindung bzw. des vorgeschlagenen Anschlagsystems erläutert. FIG.5A-5B zeigen einen Abschnitt mit nur drei Laschen, wobei die Energieführungskette zumindest zwei Längsabschnitte umfasst, mit einem ersten Längsabschnitt L1, in welchem die Energieführungskette keinen rückwärtigen Biegeradius (=RBR) aufweist und ein erster Typ der Außenlaschen 102 vorgesehen ist, der z.B. wie in FIG.1-3 oder FIG.4 ausgeführt sein kann. Der erste Typ der Außenlaschen 102 hat ein erstes größerer Winkelmaß α1 der Sperrweite seiner drei baugleichen Anschlagvorsprünge 107, vgl. FIG.5A-5B.

In einem anschließenden zweiten Längsabschnitt L2, in welchem die Energieführungskette einen rückwärtigen Biegeradius, als Schwenkrichtung RBR veranschaulicht, aufweist ist ein zweiter Typ der Außenlaschen 102' vorgesehen. Der zweite Typ der Außenlaschen 102' ist weitestgehend baugleich zum erster Typ der Außenlaschen 102 und insbesondere mit denselben Innenlasche 101 kompatibel bzw. verbindbar. Der zweiter Typ der Außenlaschen 102' unterscheidet sich nur dadurch, dass er kleiner dimensionierte Anschlagvorsprünge 107' aufweist, nämlich mit einem zweiten kleineren Winkelmaß α2 der Sperrweite der Anschlagvorsprünge 107', wobei das zweite Winkelmaß α2 insbesondere deutlich kleiner ist als das erste Winkelmaß α1 der Anschlagvorsprünge 107 des ersten Typs Außenlaschen 102. Dadurch wird auf besonders einfache Weise ein RBR ermöglicht, indem aufgrund der kleiner dimensionierten Anschlagvorsprünge 107' der zweite Typ Außenlaschen 102' zusätzlich in einer entgegengesetzten rückwärtigen Schwenkrichtung RBR schwenkbar ist. Dies erfolgt dabei ohne Veränderung der Innenlasche 101, die gleichbleibend in beiden Längsabschnitten L1, L2 genutzt wird. FIG.5A-5B zeigen dabei nur beispielhafte Schwenkwinkelbegrenzungen bzw. Winkelmaße α1, α2 die selbstverständlich auch abweichend gewählt werden können, ohne dass das Grundprinzip verlassen wird. Wie FIG.5A-5B veranschaulichen wird durch den ersten Aspekt der Erfindung ermöglicht, dass zur Realisierung rückwärtiger Biegeradien RBR lediglich die Anschlagvorsprünge 107 bzw. 107 bezüglich des Winkelmaßes (α) der Sperrweite wahlweise angepasst werden müssen. Dies kann z.B. durch einfach tauschbare Formwerkzeugeinsätze im Spritzgusswerkzeug leicht und kostengünstig erzielt werden.

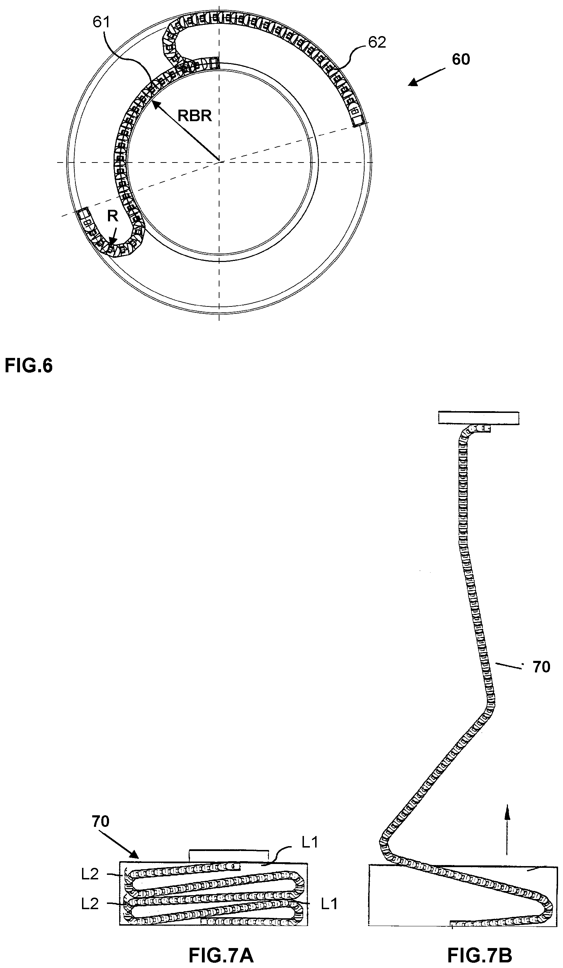

FIG.6 zeigt eine Kreiskettenanwendung als beispielhafte Anwendung ein Energieführungskette 60 für Kreisbewegung in einer ersten Endstellung und einer zweiten Endstellung. Die Energieführungskette 60 hat ein radial inneres Trum 61 und radial äußeres Trum 62, welche über einen Umlenkbogen 63 verbunden sind. Die Energieführungskette 60 ist mit den Trumen 61, 62 seitlich liegend verfahrend angeordnet und weist bestimmungsgemäß einen rückwärtigen Biegeradius RBR auf, der vergleichsweise groß ist im Vergleich zum nominalen Biegeradius R des Umlenkbogen 63. Zum Anlegen des radial inneren Trums 61 am inneren Ring der Kreisführung ist der RBR erforderlich in Kreiskettenanwendungen. Der rückwärtigen Biegeradius RBR kann dabei gemäß dem Prinzip aus FIG.5A-5B bzw. gemäß dem ersten Aspekt der Erfindung erzielt werden, mit nahezu jedem gewünschten Radius durch entsprechende Wahl der Winkelmaße α1 bzw. α2.

FIG.7A-7B zeigen schematisch eine Energieführungskette 70 für Vertikalanwendungen. Diese hat zwischen Längsabschnitten L1 ohne RBR jeweils einen kurzen Längsabschnitten L2 mit bestimmungsgemäß rückwärtigem Biegeradius zwecks zick-zack-förmiger Ablage der Energieführungskette im eingefahrenen Zustand, wie in FIG.7A gezeigt. Der vertikal ausgefahrene Zustand der Energieführungskette 70 ist in FIG.7B dargestellt. Es sei angemerkt, dass FIG.6-7 nur zur Veranschaulichung beispielhafter Anwendungen dienen und nicht die erfindungsgemäße Kette aus Innen- und Außenlaschen zeigen.

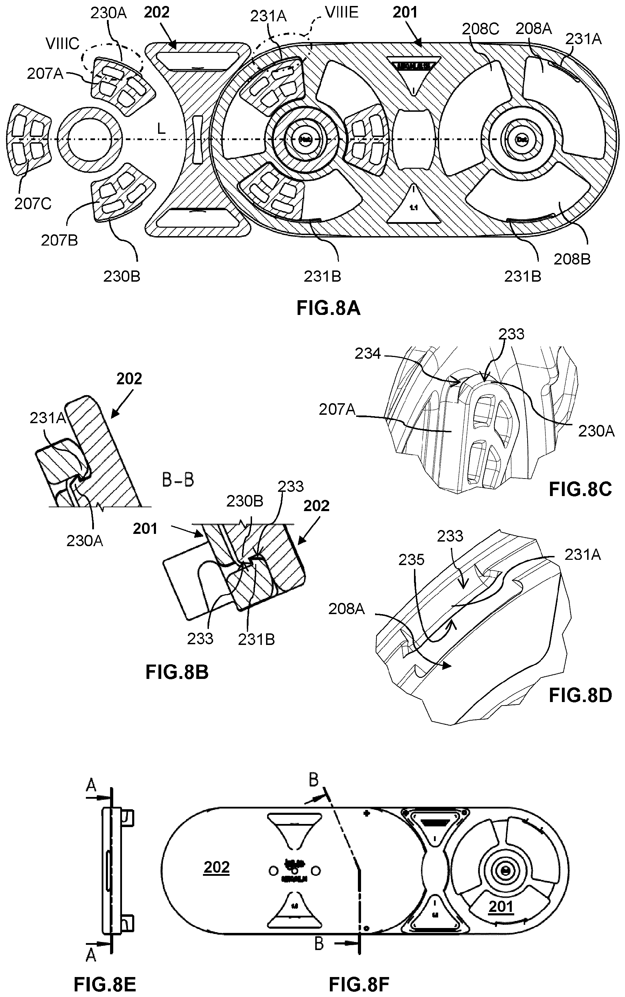

FIG.8A-8F zeigen ein Seitenlaschenpaar aus Innenlasche 201 und Außenlasche 202 gemäß einem weiteren Aspekt der Erfindung. Die grundsätzlichen Merkmale der Innenlasche 201 und Außenlasche 202 können dabei dem Beispiel aus FIG.1-3 bzw. FIG.4 entsprechen. Es wird zur Verkürzung nur auch die Unterschiede bzw. Weiterentwicklung eingegangen.

Das integrierte Anschlagsystem zur Schwenkwinkelbegrenzung ist prinzipiell identisch zu den vorstehenden Beispielen. Die Innenlasche 201 hat auch hier in beiden inneren Überlappungsbereichen 203A, 203B jeweils drei Anschlagtaschen 208A, 208B, 208C deren Anschlagwirkung, geometrische Anordnung und Kontur bis auf nachfolgende Unterschiede dem ersten Aspekt bzw. vorstehender Beschreibung entsprechen. Analog hat die Außenlasche 202 auch hier in beiden dem Ketteninneren abgewandten äußeren Überlappungsbereiche 204A, 204B jeweils drei Anschlagvorsprünge 207A, 207B, 207C deren Anschlagwirkung, geometrische Anordnung und Kontur bis auf nachfolgende Unterschiede dem ersten Aspekt bzw. vorstehender Beschreibung entsprechen.

Der wesentliche Unterschied besteht darin, dass zwei von den drei Anschlagvorsprüngen 207A, 207B ein radial vorstehendes Halteelement 230A, 230B aufweisen. Die beiden korrespondierenden Anschlagtaschen 208A, 208B haben ein zusammenwirkendes radial vorstehendes Rückhalteelement 231A, 231B.

Wie am besten aus FIG.8B ersichtlich, wirken zur seitlichen Verbindung der Laschen 201, 202 in Richtung der Schenkachse jeweils ein Halteelement 230A, 230B und ein korrespondierendes Rückhalteelement 231A, 231B derart zusammen, dass sie die verbundenen Laschen in Richtung seitlich bzw. parallel zur Schwenkachse A aneinander halten.

Der zum mittleren Bereich liegende Anschlagvorsprung 207C und die korrespondierende Anschlagtasche 208C haben jeweils jedoch bevorzugt kein Halteelement bzw. Gegenelement hierzu (Rückhalteelement), wie aus FIG.8A ersichtlich.

Jedes Halteelement 230A, 230B und jedes Rückhalteelement 231A, 231B sind jeweils am radial äußeren Umfangsbereich des zugehörigen Anschlagvorsprungs 207A, 207B bzw. der zugehörigen Anschlagtasche 208A, 208B vorstehend angeordnet und einteilig im Spritzguss mit diesen hergestellt.

Wie aus FIG.8A-8D ersichtlich sind die Rückhalteelemente 231A, 231B jeweils umfänglich bzw. bogenförmig erstrecken gestaltet und stehen von den Anschlagvorsprüngen radial nach außen vor. Die Rückhalteelemente 231A, 231B sind jeweils am äußeren Verstärkungsring bzw. der radial äußeren Umrandung der Anschlagtasche 208A, 208B radial nach innen vorstehend und ebenfalls bogenförmig in Umfangsrichtung erstreckend gestaltet.

Wie FIG.8B veranschaulicht sind Halteelemente 230A, 230B und Rückhalteelemente 231A, 231B bevorzugt in Art einer radial vorstehenden Rastnase bzw. mit einem Querschnitt in Art eines Schnapphakens ausgeführt. Dabei haben Halteelemente 230A, 230B und Rückhalteelemente 231A, 231B jeweils zur Erleichterung der Verbindung der Laschen eine Einführschräge 233 schräg zur Verschwenkebene und eine Rastfläche 234; 235 parallel zur Verschwenkebene, mittels welche die Halteelemente 230A, 230B die Rückhalteelemente 231A, 231B hintergreifen bzw. umgekehrt und so einfach aber stabil mit dem jeweils zusammenwirkenden Element beim seitlichen Zusammenfügen der Laschen lösbar verrastbar.

An der Außenlasche 202 sind die zwei Halteelemente 230A, 230B an den beiden zum Mittelbereich zugewandten Anschlagvorsprüngen 207A, 207B der Außenlasche 202 symmetrisch zu einer Längsmittelebene vorgesehen. An der Innenlasche 202 hingegen sind zwei Rückhalteelemente 231A, 231B in korrespondierenden Anschlagtaschen 208A, 208B der Innenasche 201 asymmetrisch zu einer Längsmittelebene vorgesehen. Dies ermöglicht, dass die Außenlasche 202 zur Einstellung einer Vorspannung auch um 180° mit der Innenlasche 201 verbindbar bleibt.

Die Asymmetrie der Rückhalteelemente 231A, 231B gegenüber der Längsmittelebene erlaubt es, dass die verbundenen Laschen zumindest über einen überwiegenden Anteil des Verschwenkwinkels seitlich aneinander halten. Dies wird vorzugsweise erzielt indem die zwei Rückhalteelemente 231A, 231B in bzw. an den korrespondierenden Anschlagtaschen 208A, 208B in Bezug auf die Schwenkachse A winkelversetzt und/oder mit unterschiedlichem Winkelmaß um die Schwenkachse A vorgesehen sind. Die Abmessung in Umfangsrichtung, Verteilung und sonstige Gestaltung der Halteelemente 230A, 230B und Rückhalteelemente 231A, 231B kann auch abweichend vom hier gezeigten Beispiel vorgesehen werden. Der zweite Aspekt erlaubt eine Erleichterung der Montage, da die verbundenen Laschen 201, 202 miteinander verbinden bzw. aneinander halten und erhöht außerdem die seitliche Stabilität der Laschenverbindung.

Dieser weitere Aspekt nach FIG.8A-8F kann auch unabhängig vom ersten Aspekt und z.B. mit einer anderen Anzahl Anschlagvorsprünge und Anschlagtaschen, angewendet werden, z.B. zur Verbesserung der Gestaltung nach WO 2020/152349 A1. Vorteilhaft kann die Gestaltung nach FIG.8A-8F auch kombiniert werden mit Haltevorsprüngen 121, die über einen Freiraum vorspringen, in welchen je eine angrenzende Außenlaschen 102 mit einem sich parallel zur Verschwenkebene erstreckenden, kreisbogenförmigen Führungsbereich 120 zur Seitenstabilisierung eingreifen, wie in FIG.1A gezeigt, um eine weiter verbesserte Seitenstabilisierung zu bewirken.

### Bezugszeichenliste

### FIG.1-5:

1 Obertrum
2 Untertrum
3 Umlenkbogen
100 Kettenglied
101 Innenlasche
102, 102' Außenlasche
103A, 103B Überlappungsbereiche (Innenlasche)
104A, 104B Überlappungsbereiche (Außenlasche)
105 Mittelbereich (Innenlasche)
106 mittlerer Bereich (Außenlasche)
107, 107' Anschlagvorsprünge
108 Anschlagtaschen
109 Quersteg
110 Gelenkvorsprung
111 Gelenkaufnahme
111A Gelenkring
111B, 111C Verstärkungsring
112 Materialbrücke
113 verjüngte Endbereiche (Außenlasche)
114 Zwischenbereich (Außenlasche)
120 Führungsbereich
121 Haltevorsprünge
A Schwenkachse
B Laschenbreite
C (gedachte) Scheitelachse C
D Inkreis
E Symmetrieebene
h Öffnungshöhe (Anschlagtasche)
H Gesamthöhe
L1 erster Längsabschnitt (ohne RBR)
L2 zweiter Längsabschnitt mit RBR
RBR Schwenkrichtung für RBR
α Sperrweite Anschlagvorsprünge
β Öffnungsweite Anschlagtaschen

### FIG.6-7:

60 Energieführungskette (Kreiskette mit RBR)
61 radial inneres Trum
62 radial äußeres Trum
63 Umlenkbogen
R nominaler Biegeradius
RBR Rückwärtiger Biegeradius
70 Energieführungskette für Vertikalanwendung
L1 erster Längsabschnitt (ohne RBR)
L2 zweiter Längsabschnitt mit RBR

### FIG.8A-8F

201 Innenlasche
202 Außenlasche
203A, 203B Überlappungsbereiche (Innenlasche)
204A, 204B Überlappungsbereiche (Außenlasche)
207A, 207B, 207C Anschlagvorsprünge
208A, 208B, 208C Anschlagtaschen
230A, 230B Halteelement
231A, 231B Rückhalteelement
233 Einführschräge
234; 235 Rastfläche

## Patentansprüche

1. Energieführungskette zur Führung von Leitungen, wie Schläuchen, Kabeln oder dgl., zwischen zwei Anschlussstellen, mit Kettengliedern (100), die jeweils zwei gegenüberliegende Laschen aus Kunststoff umfassen und bei zumindest einigen Kettengliedern die Laschen über mindestens einen Quersteg (109) miteinander verbunden sind, wobei die Energieführungskette zwei Laschenstränge jeweils mit in Längsrichtung alternierend aufeinanderfolgenden Innenlaschen (101) aus Kunststoff und Außenlaschen (102) aus Kunststoff aufweist, wobei die Innenlaschen zwei dem Ketteninneren zugewandte innere Überlappungsbereiche (103A, 103B) und die Außenlaschen zwei dem Ketteninneren abgewandte äußere Überlappungsbereiche (104A, 104B) aufweisen, wobei von jeweils zwei im Laschenstrang in Längsrichtung benachbarten Laschen, die eine Lasche (102) mit einem ihrer Überlappungsbereiche einen entsprechend komplementären Überlappungsbereich der anderen Lasche (101) überlappt, die beiden Laschen jeweils gelenkig in einer Ebene um eine Schwenkachse (A) verschwenkbar miteinander verbunden sind und wobei zur Schwenkwinkelbegrenzung Anschlagvorsprünge (107) im Überlappungsbereich der einen Lasche (102) vorgesehen sind und in korrespondierende Anschlagtaschen (108), die im Überlappungsbereich der anderen Lasche (101) vorgesehen sind und die als nur einseitig zur anderen Lasche offene Vertiefungen ausgeführt sind, greifen, wobei Anschlagflächen (107A, 107B) eines Anschlagvorsprungs (107) mit Gegenanschlagflächen (108A, 108B) einer Anschlagtasche (108) zur Schwenkwinkelbegrenzung zusammenwirken, **dadurch gekennzeichnet,**
- **dass** jeder der beiden Überlappungsbereiche der einen Lasche (102) drei, insbesondere genau drei, einteilig mit dieser Lasche (102) gebildete Anschlagvorsprünge (107) umfasst, wobei die drei Anschlagvorsprünge (107) eine Sperrweite zwischen ihren Anschlagflächen (107A, 107B) aufweisen mit einem Winkelmaß der Sperrweite, wobei das Winkelmaß der Sperrweite bevorzugt jeweils mindestens 40° (α≥ 40°) beträgt,
- **dass** jeder der beiden Überlappungsbereiche der anderen Lasche (101) drei, insbesondere genau drei, als einseitig offene Vertiefung in dieser Lasche (102) gebildete Anschlagtaschen (108) umfasst, wobei die drei Anschlagtaschen (108) eine Öffnungsweite zwischen ihren Gegenanschlagflächen (108A, 108B) aufweisen mit einem Winkelmaß der Öffnungsweite, wobei das Winkelmaß der Öffnungsweite bevorzugt jeweils mindestens 55° (β ≥ 55°) beträgt, und
- **dass** das Winkelmaß (α) der Sperrweite eines Anschlagvorsprungs (107) mindestens 50% des Winkelmaß (β) der Öffnungsweite einer Anschlagtasche (108) beträgt.

2. Energieführungskette zur Führung von Leitungen, wie Schläuchen, Kabeln oder dgl., zwischen zwei Anschlussstellen, mit Kettengliedern, die jeweils zwei gegenüberliegende Laschen aus Kunststoff umfassen, und bei zumindest einigen Kettengliedern die Laschen über mindestens einen Quersteg miteinander verbunden sind, wobei die Energieführungskette zwei Laschenstränge jeweils mit in Längsrichtung alternierend aufeinanderfolgenden Innenlaschen (101) aus Kunststoff und Außenlaschen (102) aus Kunststoff aufweist, wobei die Innenlaschen zwei dem Ketteninneren zugewandte innere Überlappungsbereiche (103A, 103B) und die Außenlaschen zwei dem Ketteninneren abgewandte äußere Überlappungsbereiche (104A, 104B) aufweisen, wobei von jeweils zwei im Laschenstrang in Längsrichtung benachbarten Laschen, die eine Lasche (102) mit einem ihrer Überlappungsbereiche einen entsprechend komplementären Überlappungsbereich der anderen Lasche (101) überlappt, die beiden Laschen jeweils gelenkig in einer Ebene um eine Schwenkachse (A) verschwenkbar miteinander verbunden sind und wobei zur Schwenkwinkelbegrenzung Anschlagvorsprünge (107) im Überlappungsbereich der einen Lasche (102) vorgesehen sind und in korrespondierende Anschlagtaschen (108), die im Überlappungsbereich der anderen Lasche (101) vorgesehen sind und die als nur einseitig zur anderen Lasche offene Vertiefungen ausgeführt sind, greifen, wobei Anschlagflächen (107A, 107B) eines Anschlagvorsprungs (107) mit Gegenanschlagflächen (108A, 108B) einer Anschlagtasche (108) zur Schwenkwinkelbegrenzung zusammenwirken, **dadurch gekennzeichnet,**
- **dass** jeder der beiden Überlappungsbereiche der einen Lasche (102) drei, insbesondere genau drei, einteilig mit dieser Lasche (102) gebildete Anschlagvorsprünge (107) umfasst, wobei die drei Anschlagvorsprünge (107) eine Sperrweite zwischen ihren Anschlagflächen (107A, 107B) aufweisen mit einem Winkelmaß der Sperrweite,
- **dass** jeder der beiden Überlappungsbereiche der anderen Lasche (101) drei, insbesondere genau drei, als einseitig offene Vertiefung in dieser Lasche (102) gebildete Anschlagtaschen (108) umfasst, wobei die drei Anschlagtaschen (108) eine Öffnungsweite zwischen ihren Gegenanschlagflächen (108A, 108B) aufweisen mit einem Winkelmaß der Öffnungsweite, und
- **dass** in zumindest einem Längsabschnitt der Energieführungskette das Winkelmaß (α) der Sperrweite der Anschlagvorsprünge an den einen Laschen (102), vorzugsweise an den Außenlaschen (102), so gewählt ist, dass diese einen Laschen (102), vorzugsweise Außenlaschen (102), gegenüber einer gestreckten Lage, sowohl in einer Schwenkrichtung als auch in einer entgegengesetzten rückwärtigen Schwenkrichtung relativ zu den damit verbundenen anderen Laschen (101), vorzugsweise Innenlaschen (101), um die jeweilige Schwenkachse (A) verschwenkbar sind.

3. Energieführungskette nach Anspruch 1 oder 2, **dadurch gekennzeichnet, dass**
die Laschenbreite (B) des Laschenstrangs, gemessen in Richtung parallel zur Schwenkachse (A), jeweils maximal 25mm beträgt, bevorzugt ≤ 20mm, besonders bevorzugt ≤ 16mm, wobei vorzugsweise das Verhältnis der Laschenbreite zur Außenhöhe jeweils ≤ 20% beträgt, besonders bevorzugt ≤ 18% beträgt.

4. Energieführungskette nach Anspruch 1, 2 oder 3, **dadurch gekennzeichnet, dass**
- die Anschlagvorsprünge (107) und die Anschlagtaschen (108) im Längsschnitt der Laschen senkrecht zur Schwenkachse (A) eine Kontur aufweisen welche jeweils im Wesentlichen einem Kreisringsegment entspricht und/oder
- die Anschlagflächen (107A, 107B) der Anschlagvorsprünge sowie die Gegenanschlagflächen (108A, 108B) der Anschlagtaschen (108) überwiegend ebene Flächen bilden, welche zur Verschwenkebene im Wesentlichen senkrecht liegen;
und/oder
- die Anschlagvorsprünge (107) der einen Lasche (102) ein untereinander im Wesentlichen identisches Winkelmaß der Sperrweite zwischen ihren Anschlagflächen (107A, 107B) aufweisen und die Anschlagtaschen (108) der anderen Lasche (101) ein untereinander im Wesentlichen identisches Winkelmaß der Öffnungsweite zwischen ihren Gegenanschlagflächen (107A, 107B) aufweisen.

5. Energieführungskette nach einem der vorstehenden Ansprüche 1 bis 4, **dadurch gekennzeichnet, dass**
- die Anschlagvorsprünge (107) und die Anschlagtaschen (108) drehsymmetrisch bzw. in Umfangsrichtung gleichverteilt um die jeweilige Schwenkachse vorgesehen sind, vorzugsweise mit einer 120° Drehsymmetrie bezüglich der Schwenkachse (A);
und/oder
- zur Schwenkwinkelbegrenzung jeweils eine Anschlaganordnung mit genau drei Anschlagvorsprüngen (107) in jedem Überlappungsbereich der einen Lasche (102) vorgesehen ist zur Schwenkwinkelbegrenzung jeweils eine Anschlaganordnung mit genau drei korrespondierenden Anschlagtaschen (108) in jedem Überlappungsbereich der anderen Lasche (101) vorgesehen ist, wobei je genau ein Anschlagvorsprung (107) in genau eine korrespondierende Anschlagtasche (108) greift.

6. Energieführungskette nach einem der vorstehenden Ansprüche, **dadurch gekennzeichnet, dass** die Außenlaschen (102) jeweils in jedem ihrer äußeren Überlappungsbereiche (104A, 104B) eine Anschlaganordnung mit genau drei Anschlagvorsprüngen (107) aufweisen und die Außenlaschen (102) bezüglich einer ersten Symmetrieebene, welche in Längsrichtung und durch beide Schwenkachsen (A) verläuft, im Wesentlichen spiegelsymmetrisch ausgeführt sind,
vorzugweise weiterhin **dadurch gekennzeichnet, dass** die Außenlasche (102) einen in der ersten Symmetrieebene liegenden Anschlagvorsprung (107) aufweisen, welcher dem in Längsrichtung mittleren Bereich (106) der Außenlasche (102) zugewandt ist oder welcher dem in Längsrichtung mittleren Bereich (106) der Außenlasche (102) abgewandt ist.

7. Energieführungskette nach einem der vorstehenden Ansprüche insbesondere nach Anspruch 4, **dadurch gekennzeichnet, dass** die Anschlagflächen (107A, 107B) und die Gegenanschlagflächen (108A, 108B) zumindest überwiegend ebene Flächen bilden, wobei sich die beiden Anschlagflächen (107A, 107B) eines Anschlagvorsprungs (107) und/oder die beiden Gegenanschlagflächen (108A, 108B) einer Anschlagtasche (108) jeweils in einer gedachten Scheitelachse (C) schneiden die innerhalb des Überlappungsbereichs liegt, vorzugsweise innerhalb eines Bereichs, durch einen gedachten Inkreis (D) radial innen an einer bzw. der Kreisringsegment-Kontur der Anschlagtaschen (108) liegt ,
vorzugweise weiterhin **dadurch gekennzeichnet, dass** sich die beiden Gegenanschlagflächen (108A, 108B) einer Anschlagtasche (108) jeweils in einer gedachten Scheitelachse (C) schneiden, die innerhalb eines Bereichs eines kreisringförmigen als Gelenkzapfen dienenden Gelenkvorsprungs (110) bzw. einer kreisringförmigen als Gelenkaufnahme (111) dienenden Vertiefung zur Aufnahme eines korrespondierenden Gelenkvorsprungs der gegenüberliegenden Lasche liegt.

8. Energieführungskette nach einem der vorstehenden Ansprüche, **dadurch gekennzeichnet, dass** die Lasche (101), vorzugsweise Innenlasche (101), zwischen zwei in Umfangsrichtung um die Schwenkachse (A) aufeinanderfolgenden Anschlagtaschen (108) jeweils eine nach Außen aufweitende, vorzugsweise im Längsschnitt im Wesentlichen V-förmige, Materialbrücke (112) bildet, welche vorzugsweise an ihrer schmalsten Stelle eine Mindestbogenabmessung ≥ 3mm, insbesondere ≥ 4mm hat,
wobei die Lasche (101) vorzugsweise einen umlaufenden Verstärkungsring (111B; 111C) bildet, in welchen die Materialbrücken (112) übergehen, vorzugweise weiterhin **dadurch gekennzeichnet, dass** die Innenlasche (101) einen radial inneren Gelenkring (111A) aufweist und zwischen Gelenkring (111A) und Verstärkungsring (111B) eine als Gelenkaufnahme (111) dienenden kreisringförmige Vertiefung zur Aufnahme eines korrespondierenden Gelenkvorsprungs (110) der gegenüberliegenden Lasche aufweist, und
die Außenlasche (102) einen kreisringförmigen als Gelenkzapfen dienenden Gelenkvorsprung (110) aufweist, zur Zusammenwirkung mit der Gelenkaufnahme (111) der Innenlasche (101), wobei Gelenkvorsprung (110) der Außenlasche (102) und Anschlagvorsprünge (107) der Außenlasche (102) vorzugsweise um ein im Wesentlichen identisches Maß nach innen vorstehen und in einer Ebene parallel zur Verschwenkebene bündig enden.

9. Energieführungskette nach einem der vorstehenden Ansprüche, **dadurch gekennzeichnet, dass** die Anschlagtaschen (108) eine Öffnungshöhe (h) radial zur Schwenkachse (A) aufweisen, welche mindestens 15%, vorzugsweise mindestens 20% der Gesamthöhe (H) der Lasche (101) senkrecht zur Längsrichtung beträgt, und wobei die Anschlagvorsprünge (107) eine entsprechende lediglich um Bewegungsspiel reduzierte Radialabmessung radial zur Schwenkachse (A) aufweisen.

10. Energieführungskette nach einem der vorstehenden Ansprüche, **dadurch gekennzeichnet, dass** die Energieführungskette zumindest zwei Längsabschnitte umfasst,
mit einem ersten Längsabschnitt, in welchem die Energieführungskette keinen rückwärtigen Biegeradius aufweist und ein erster Typ der einen Laschen, vorzugsweise ein erster Typ der Außenlaschen (102), mit einem ersten größeren Winkelmaß (α1) der Sperrweite der Anschlagvorsprünge (107) vorgesehen ist,
mit einem zweiten Längsabschnitt, in welchem die Energieführungskette einen rückwärtigen Biegeradius aufweist und ein zweiter Typ der einen Laschen, vorzugsweise ein zweiter Typ der Außenlaschen (102), mit einem zweiten kleineren Winkelmaß (α2) der Sperrweite der Anschlagvorsprünge (107) vorgesehen ist, wobei das zweite Winkelmaß (α2) deutlich kleiner ist als das ersten Winkelmaß (α1), sodass der zweite Typ der einen Laschen, vorzugsweise der Außenlaschen (102), gegenüber den anderen Laschen des ersten Typs zusätzlich in einer entgegengesetzten rückwärtigen Schwenkrichtung schwenkbar ist.

11. Energieführungskette nach einem der vorstehenden Ansprüche, **dadurch gekennzeichnet, dass**
einstückig an einem Mittelbereich (105) einer Lasche (101), insbesondere der Innenlasche (101), jeweils zwei Haltevorsprünge (121) vorgesehen sind die über einen zugehörigen Freiraum vorspringen, in welchen je eine angrenzende weitere Lasche (102), insbesondere Außenlasche (102) mit einem sich parallel zur Verschwenkebene erstreckenden, kreisbogenförmigen Führungsbereich (120) zur Seitenstabilisierung eingreifen kann; und/oder
die Außenlasche (102) in verjüngten Bereichen (113) an Längsenden des Überlappungsbereichs (104A, 104B) in Bezug auf ihre Laschenbreite eine dünnere Materialdicke aufweist als in ihrem Mittelbereich (105) dazwischen, wobei ein Bereich (114) mit gegenüber den verjüngten Bereichen (113) größerer Materialstärke sich in Längsrichtung (L) vorzugsweise über mindestens 80% der Kettenteilung erstreckt und/oder
insbesondere mindestens 25% des Durchmessers des kreisringförmigen Gelenkzapfens bzw. Gelenkvorsprungs (110) abdeckt.

12. Energieführungskette nach dem Oberbegriff aus Anspruch 1 und/oder nach einem der vorstehenden Ansprüche, **dadurch gekennzeichnet, dass**
zumindest ein Anschlagvorsprung (207A, 207B) ein radial vorstehendes Halteelement (230A, 230B) aufweist und zumindest eine korrespondierende Anschlagtasche (208A, 208B) ein radial vorstehendes Rückhalteelement (231A, 231B) aufweist, wobei Halteelement (230A, 230B) und Rückhalteelement (231A, 231B) derart zusammenwirken, dass sie verbundene Laschen seitlich aneinander halten.

13. Energieführungskette nach Anspruch 12, **dadurch gekennzeichnet, dass** genau zwei Anschlagvorsprünge (207A, 207B) jeweils ein radial vorstehendes Halteelement (230A, 230B) aufweisen und die beiden korrespondierenden Anschlagtaschen (208A, 208B) ein radial vorstehendes, zusammenwirkendes Rückhalteelement (231A, 231B) aufweisen.

14. Energieführungskette nach Anspruch 12 oder 13, **dadurch gekennzeichnet, dass** jedes Halteelement (230A, 230B) und jedes Rückhalteelement (231A, 231B)
- jeweils am radial äußeren Umfangsbereich des Anschlagvorsprungs (207A, 207B) bzw. der Anschlagtasche (208A, 208B) vorgesehen ist; und/oder
- umfänglich bzw. bogenförmig erstreckt verläuft; und/oder
- als radial vorstehende Rastnase ausgeführt ist, insbesondere mit einer Einführschräge (233) schräg zur Verschwenkebene und einer Rastfläche (234; 235) parallel zur Verschwenkebene, und vorzugsweise mit dem jeweils zusammenwirkenden Element beim Zusammenfügen der Laschen lösbar verrastbar ist.

15. Energieführungskette nach Anspruch 12, 13 oder 14, **dadurch gekennzeichnet,**
**dass** zwei Halteelemente (230A, 230B) an Anschlagvorsprüngen (207A, 207B) der Außenlasche (202) symmetrisch zu einer Längsmittelebene vorgesehen sind, und zwei Rückhalteelemente (231A, 231B) in korrespondierenden Anschlagtaschen (208A, 208B) der Innenasche (201) asymmetrisch zu einer Längsmittelebene vorgesehen sind; und/oder dass
zwei Rückhalteelemente (231A, 231B) in korrespondierenden Anschlagtaschen (208A, 208B) in Bezug auf die Schwenkachse (A) winkelversetzt und/oder mit unterschiedlichem Winkelmass um die Schwenkachse (A) vorgesehen sind, vorzugsweise so dass sie verbundene Laschen zumindest über einen überwiegenden Anteil des Verschwenkwinkels seitlich aneinander halten.

## Claims

1. An energy guide chain for guiding lines, such as hoses, cables or the like, between two connection points, with chain links (100) which in each case comprise two opposing plates, of plastics material, the plates being connected together, in the case of at least some of the chain links, by way of at least one crosspiece (109), the energy guide chain having two plate strings in each case with inner plates (101) of plastics material and outer plates (102) of plastics material succeeding one another alternately in the longitudinal direction, the inner plates having two inner overlap regions (103A, 103B) facing the inside of the chain and the outer plates having two outer overlap regions (104A, 104B) facing away from the inside of the chain, the one plate (102) of in each case two plates adjacent in the longitudinal direction in the plate string overlapping with one of its overlap regions over a correspondingly complementary overlap region of the other plate (101), the two plates being in each case connected together in articulated manner in a plane so as to be swivelable about a swivel axis (A) and, to limit the swivel angle, stop projections (107) being provided in the overlap region of the one plate (102) and engaging in corresponding stop pockets (108) provided in the overlap region of the other plate (101) and embodied as depressions open to the other plate on only one side, stop faces (107A, 107B) of one stop projection (107) interacting with mating stop faces (108A, 108B) of a stop pocket (108) to limit the swivel angle, **characterized,**
- **in that** each of the two overlap regions of the one plate (102) comprises three, in particular precisely three, stop projections (107) formed in one piece with this plate (102), wherein the three stop projections (107) have a blocking width between their stop faces (107A, 107B) with an angular dimension of the blocking width, wherein the angular dimension of the blocking width preferably amounts in each case to at least 40° (α ≥ 40°),
- **in that** each of the two overlap regions of the other plate (101) comprises three, in particular precisely three, stop pockets (108) formed as depressions open on one side in this plate (102), wherein the three stop pockets (108) have an opening width between their mating stop faces (108A, 108B) with an angular dimension of the opening width, wherein the angular dimension of the opening width preferably amounts in each case to at least 55° (β ≥ 55°), and
- **in that** the angular dimension (α) of the blocking width of a stop projection (107) amounts to at least 50% of the angular dimension (β) of the opening width of a stop pocket (108).

2. An energy guide chain for guiding lines, such as hoses, cables or the like, between two connection points, with chain links which in each case comprise two opposing plates, of plastics material, the plates being connected together, in the case of at least some of the chain links, by way of at least one crosspiece, the energy guide chain having two plate strings in each case with inner plates (101) of plastics material and outer plates (102) of plastics material succeeding one another alternately in the longitudinal direction, the inner plates having two inner overlap regions (103A, 103B) facing the inside of the chain and the outer plates having two outer overlap regions (104A, 104B) facing away from the inside of the chain, the one plate (102) of in each case two plates adjacent in the longitudinal direction in the plate string overlapping with one of its overlap regions over a correspondingly complementary overlap region of the other plate (101), the two plates being in each case connected together in articulated manner in a plane so as to be swivelable about a swivel axis (A) and, to limit the swivel angle, stop projections (107) being provided in the overlap region of the one plate (102) and engaging in corresponding stop pockets (108) provided in the overlap region of the other plate (101) and embodied as depressions open to the other plate on only one side, stop faces (107A, 107B) of one stop projection (107) interacting with mating stop faces (108A, 108B) of a stop pocket (108) to limit the swivel angle, **characterized,**
- **in that** each of the two overlap regions of the one plate (102) comprises three, in particular precisely three, stop projections (107) formed in one piece with this plate (102), wherein the three stop projections (107) have a blocking width between their stop faces (107A, 107B) with an angular dimension of the blocking width,
- **in that** each of the two overlap regions of the other plate (101) comprises three, in particular precisely three, stop pockets (108) formed as depressions open on one side in this plate (102), wherein the three stop pockets (108) have an opening width between their mating stop faces (108A, 108B) with an angular dimension of the opening width, and
- **in that**, in at least one longitudinal portion of the energy guide chain, the angular dimension (α) of the blocking width of the stop projections on the one plate (102), preferably on the outer plates (102), is selected such that these one plates (102), preferably outer plates (102), are swivelable relative to an extended position, both in one swivel direction and in an opposing, reverse swivel direction relative to the other plates (101), preferably inner plates (101), connected therewith about the respective swivel axis (A).

3. The energy guide chain according to Claim 1 or 2, **characterized in that** the plate width (B) of the plate string amounts, when measured in a direction parallel to the swivel axis (A), in each case to at most 25 mm, preferably ≤ 20 mm, particularly preferably ≤ 16 mm, wherein the ratio of plate width to outer height amounts in each case to ≤ 20%, particularly preferably ≤ 18%.

4. The energy guide chain according to Claim 1, 2 or 3, **characterized in that**
- the stop projections (107) and the stop pockets (108), when viewed in the longitudinal section of the plates perpendicular to the swivel axis (A), have a contour which corresponds in each case substantially to a circular ring segment and/or
- the stop faces (107A, 107B) of the stop projections and the mating stop faces (108A, 108B) of the stop pockets (108) form predominantly planar faces which lie substantially perpendicular to the swivel plane; and/or
- the stop projections (107) of the one plate (102) have a mutually substantially identical angular dimension of the blocking width between their stop faces (107A, 107B) and the stop pockets (108) of the other plate 101 have a mutually substantially identical angular dimension of the opening width between their mating stop faces (107A, 107B).

5. The energy guide chain according to any one of preceding Claims 1 to 4, **characterized in that**
- the stop projections (107) and the stop pockets (108) are provided rotationally symmetrically or uniformly distributed in the circumferential direction about the respective swivel axis, preferably with 120° rotational symmetry relative to the swivel axis (A); and/or
- to limit the swivel angle in each case one limit stop arrangement with precisely three stop projections (107) is provided in each overlap region of the one plate (102), and to limit the swivel angle in each case one limit stop arrangement with precisely three corresponding stop pockets (108) is provided in each overlap region of the other plate (101), wherein in each case precisely one stop projection (107) engages in precisely one corresponding stop pocket (108).

6. The energy guide chain according to any one of the preceding claims, **characterized in that** the outer plates (102) in each case have a limit stop arrangement with precisely three stop projections (107) in each of their outer overlap regions (104A, 104B) and the outer plates (102) are of substantially mirror-symmetrical construction relative to a first plane of symmetry running in the longitudinal direction and through both swivel axes (A), preferably further
**characterized in that** the outer plate (102) has a stop projection (107) lying in the first plane of symmetry, which stop projection (107) faces the central region (106), in the longitudinal direction, of the outer plate (102) or faces away from the central region (106), in the longitudinal direction, of the outer plate (102).

7. The energy guide chain according to any one of the preceding claims and in particular according to Claim 4, **characterized in that** the stop faces (107A, 107B) and the mating stop faces (108A, 108B) form at least predominantly planar faces, wherein the two stop faces (107A, 107B) of a stop projection (107) and/or the two mating stop faces (108A, 108B) of a stop pocket (108) in each case intersect in a notional vertex axis (C) which lies within the overlap region, preferably within a region through a notional incircle (D) which lies radially to the inside of a or the circular ring segment contour of the stop pockets (108), preferably further **characterized in that** the two mating stop faces (108A, 108B) of a stop pocket (108) intersect in each case in a notional vertex axis (C) lying within a region of a circular ring-shaped joint projection (110) serving as a joint pin or a circular ring-shaped depression serving as a joint receptacle (111) for receiving a corresponding joint projection of the opposing plate.

8. The energy guide chain according to any one of the preceding claims, **characterized in that** the plate (101), preferably inner plate (101), form in each case an outwardly widening material bridge (112) which is preferably substantially V-shaped in longitudinal section between two stop pockets (108) succeeding one another in the circumferential direction about the swivel axis (A), which bridge (112) has a minimum arc dimension at its narrowest point of ≥ 3 mm, in particular ≥ 4 mm, wherein the plate (101) preferably forms a peripheral reinforcing ring (111B; 111C) into which the material bridges (112) transition, preferably further
**characterized in that** the inner plate (101) has a radially inner joint ring (111A) and, between joint ring (111A) and reinforcing ring (111B), a circular ring-shaped depression serving as a joint receptacle (111) for receiving a corresponding joint projection (110) of the opposing plate, and the outer plate (102) has a circular ring-shaped joint projection (110) serving as joint pin, for interaction with the joint receptacle (111) of the inner plate (101), wherein joint projection (110) of the outer plate (102) and stop projections (107) of the outer plate (102) preferably protrude inward by a substantially identical amount and end flush in a plane parallel to the swivel plane.

9. The energy guide chain according to any one of the preceding claims, **characterized in that** stop pockets (108) have an opening height (h) radial to the swivel axis (A) which amounts to at least 15%, preferably at least 20%, of the total height (H) of the plate (101) perpendicular to the longitudinal direction, wherein the stop projections (107) have a corresponding radial dimension radial to the swivel axis (A) reduced only by movement clearance.

10. The energy guide chain according to any one of the preceding claims, **characterized in that** the energy guide chain comprises at least two longitudinal portions, with a first longitudinal portion, in which the energy guide chain does not have a reverse bend radius and a first type of plates, preferably a first type of outer plates (102), is provided with a first, larger angular dimension (α1) of the blocking width of the stop projections (107), and with a second longitudinal portion, in which the energy guide chain has a reverse bend radius and a second type of plates, preferably a second type of outer plates (102), is provided with a second, smaller angular dimension (α2) of the blocking width of the stop projections (107), wherein the second angular dimension (α2) is markedly smaller than the first angular dimension (α1), such that the second type of plates, preferably the outer plates (102), are swivelable additionally in an opposing reverse swivel direction relative to the other plates of the first type.

11. The energy guide chain according to any one of the preceding claims, **characterized in that** two holding projections (121) are in each case provided in one piece on a central region (105) of a plate (101), in particular of the inner plate (101), said holding projections (121) projecting over an associated space into which in each case an adjacent further plate (102), in particular outer plate (102), may engage for lateral stabilization with a circular arc-shaped guide region (120) extending parallel to the swivel plane; and/or
the outer plate (102) has a thinner material thickness in tapered regions (113) at longitudinal ends of the overlap region (104A, 104B) relative to its plate width than in its central region (105) therebetween, wherein a region (114) of greater material thickness relative to the tapered regions (113) extends in the longitudinal direction (L) preferably over at least 80% of the chain pitch and/or covers in particular at least 25% of the diameter of the circular ring-shaped joint pin or joint projection (110).

12. The energy guide chain according to the preamble of Claim 1 and/or according to any one of the preceding claims, **characterized in that** at least one stop projection (207A, 207B) has a radially protruding holding element (230A, 230B) and at least one corresponding stop pocket (208A, 208B) has a radially protruding retaining element (231A, 231B), wherein holding element (230A, 230B) and retaining element (231A, 231B) interact in such a way as to hold connected plates laterally against one another.

13. The energy guide chain according to Claim 12, **characterized in that** precisely two stop projections (207A, 207B) in each case have a radially protruding holding element (230A, 230B) and the corresponding two stop pockets (208A, 208B) have a radially protruding, interacting retaining element (231A, 231B).

14. The energy guide chain according to Claim 12 or 13, **characterized in that** each holding element (230A, 230B) and each retaining element (231A, 231B)
- is in each case provided on the radially outer circumferential region of the stop projection (207A, 207B) or of the stop pocket (208A, 208B); and/or
- extends circumferentially or in arcuate manner;
and/or
- is embodied as a radially protruding latching lug, in particular with an insertion bevel (233) oblique relative to the swivel plane and a latching surface (234; 235) parallel to the swivel plane, and preferably is detachably latchable together with the in each case interacting element when the plates are joined together.

15. The energy guide chain according to Claim 12, 13 or 14, **characterized**
**in that** two holding elements (230A, 230B) on stop projections (207A, 207B) of the outer plate (202) are provided symmetrically relative to a longitudinal central plane, and two retaining elements (231A, 231B) are provided asymmetrically relative to a longitudinal central plane in corresponding stop pockets (208A, 208B) of the inner plate (201); and/or
**in that** two retaining elements (231A, 231B) are angularly offset in corresponding stop pockets (208A, 208B) in respect of swivel axis (A) and/or are provided with different angular dimensions about the swivel axis (A), preferably such that they hold connected plates laterally against one another at least over a major proportion of the swivel axis.

## Revendications

1. Chaîne de guidage d'énergie destinée au guidage de conduites, telles que des tuyaux, des câbles ou similaires, entre deux points de raccordement, comportant des maillons de chaîne (100) qui comprennent chacun deux éclisses opposées en matière plastique et, pour au moins certains maillons de chaîne, les éclisses sont reliées entre elles par au moins une traverse (109), la chaîne de guidage d'énergie comportant deux brins à éclisses comprenant chacun des éclisses intérieures (101) en matière plastique se succédant en alternance dans le sens longitudinal (101) et des éclisses extérieures (102) en matière plastique, les éclisses intérieures présentant deux zones de chevauchement intérieures (103A, 103B) tournées vers l'intérieur de la chaîne et les éclisses extérieures présentant deux zones de chevauchement extérieures (104A, 104B) tournées à l'opposé de l'intérieur de la chaîne, l'une des deux éclisses (102) voisines respectives en sens longitudinal dans le brin à éclisses chevauchant, par l'une de ses zones de chevauchement, une zone de chevauchement complémentaire correspondante de l'autre éclisse (101), les deux éclisses étant reliées entre eux de manière articulée dans un plan autour d'un axe de pivotement (A), et dans lequel, pour limiter l'angle de pivotement, des saillies de butée (107) sont prévues dans la zone de chevauchement d'une éclisse (102) et s'engagent dans des poches de butée correspondantes (108) prévues dans la zone de chevauchement de l'autre éclisse (101) et qui sont réalisées sous forme de renfoncements ouverts d'un seul côté vers l'autre éclisse, les surfaces de butée (107A, 107B) d'une saillie de butée (107) coopèrent avec des surfaces de contre-butée (108A, 108B) d'une poche de butée (108) pour limiter l'angle de pivotement, **caractérisé en ce**
- **que** chacune des deux zones de chevauchement de ladite éclisse (102) comprend trois, en particulier exactement trois, saillies de butée (107) formées d'un seul tenant avec cette éclisse (102), les trois saillies de butée (107) présentant une largeur de blocage entre leurs surfaces de butée (107A, 107B) présentant une mesure angulaire de la largeur de blocage, la mesure angulaire de la largeur de blocage étant de préférence d'au moins 40° (α ≥ 40°) dans chaque cas,
- **que** chacune des deux zones de chevauchement de l'autre éclisse (101) comprend trois, en particulier exactement trois, poches de butée (108) formées sous la forme d'un renfoncement ouvert d'un côté dans cette éclisse (102), les trois poches de butée (108) présentant une largeur d'ouverture entre leurs surfaces de contre-butée (108A, 108B) avec une mesure angulaire de l'ouverture, la mesure angulaire de l'ouverture étant de préférence d'au moins 55° (ß ≥ 55°) dans chaque cas, et en ce
- **que** l'angle (α) de la largeur de blocage d'une saillie de butée (107) est d'au moins 50 % de la mesure angulaire (ß) de la largeur d'ouverture d'une poche de butée (108).

2. Chaîne de guidage d'énergie destinée au guidage de conduites, telles que des tuyaux, des câbles ou similaires, entre deux points de raccordement, comportant des maillons de chaîne qui comprennent chacun deux éclisses opposées en matière plastique, et dans laquelle, pour au moins certains maillons de chaîne, les éclisses sont reliées entre elles par au moins une traverse, la chaîne de guidage d'énergie comportant deux brins à éclisses comprenant chacune, dans le sens longitudinal, une succession alternée d'éclisses intérieures (101) en matière plastique et d'éclisses extérieures (102) en matière plastique, les éclisses intérieures présentant deux zones de chevauchement intérieures (103A, 103B) tournées vers l'intérieur de la chaîne et les éclisses extérieures présentant deux zones de chevauchement extérieures (104A, 104B) tournées à l'opposé de l'intérieur de la chaîne, l'une des deux éclisses (102) voisines en sens longitudinal dans le brin à éclisses chevauchant, par l'une de ses zones de chevauchement, une zone de chevauchement complémentaire correspondante de l'autre éclisse (101), les deux éclisses étant respectivement reliées entre eux de manière articulée dans un plan autour d'un axe de pivotement (A) et, pour limiter l'angle de pivotement, des saillies de butée (107) sont prévues dans la zone de chevauchement d'une éclisse (102) et s'engagent dans des poches de butée correspondantes (108) prévues dans la zone de chevauchement de l'autre éclisse (101) et qui sont réalisées sous forme de renfoncements ouverts d'un seul côté vers l'autre éclisse, les surfaces de butée (107A, 107B) d'une saillie de butée (107) coopèrent avec des surfaces de contre-butée (108A, 108B) d'une poche de butée (108) pour limiter l'angle de pivotement, **caractérisé en ce**
- **que** chacune des deux zones de chevauchement de ladite éclisse (102) comprend trois, en particulier exactement trois, saillies de butée (107) formées d'un seul tenant avec cette éclisse (102), les trois saillies de butée (107) présentant une largeur de blocage entre leurs surfaces de butée (107A, 107B) avec une mesure angulaire de la largeur de blocage,
- **que** chacune des deux zones de chevauchement de l'autre éclisse (101) comprend trois, en particulier exactement trois, poches de butée (108) formées sous la forme d'un renfoncement ouvert d'un côté dans cette éclisse (102), les trois poches de butée (108) présentant une largeur d'ouverture entre leurs surfaces de contre-butée (108A, 108B) présentant une mesure angulaire de la largeur d'ouverture, et en ce
- **que** dans au moins une section longitudinale de la chaîne de guidage d'énergie, l'angle (α) de la largeur de blocage des saillies de butée (107) sur l'une des éclisses (102), de préférence sur les éclisses extérieures (102), est choisi de cette manière, que ces éclisses (102), de préférence les éclisses extérieures (102), par rapport à une position étirée, peuvent pivoter aussi bien dans un sens de pivotement que dans un sens de pivotement opposé vers l'arrière par rapport aux autres éclisses (101) qui leur sont reliées, de préférence des éclisses intérieures (101), autour de l'axe de pivotement respectif (A).

3. Chaîne de guidage d'énergie selon la revendication 1 ou 2, **caractérisée en ce que**
la largeur d'éclisses (B) du brin à éclisses, mesurée dans une direction parallèle à l'axe de pivotement (A), est respectivement de 25 mm au maximum, de préférence ≤ 20 mm, et de préférence encore ≤ 16 mm, le rapport entre la largeur d'éclisses et la hauteur extérieure étant de préférence ≤ 20 %, et de préférence encore ≤ 18 %.

4. Chaîne de guidage d'énergie selon la revendication 1, 2 ou 3, **caractérisée en ce que**
- les saillies de butée (107) et les poches de butée (108), en coupe longitudinale des éclisses perpendiculairement à l'axe de pivotement (A), présentent un contour qui correspond respectivement essentiellement à un segment d'anneau circulaire et/ou
- les surfaces de butée (107A, 107B) des saillies de butée ainsi que les surfaces de contre-butée (108A, 108B) des poches de butée (108) forment des surfaces majoritairement planes, qui sont sensiblement perpendiculaires au plan de pivotement; et/ou
- les saillies de butée (107) de l'une (102) des éclisses (102) présentent, entre eux, une mesure angulaire de la largeur de blocage sensiblement identique entre leurs surfaces de butée (107A, 107B), et les poches de butée (108) de l'autre (101) des éclisses présentent, entre eux, une mesure angulaire de la largeur d'ouverture sensiblement identique entre leurs surfaces de contre-butée (107A, 107B).

5. Chaîne de guidage d'énergie selon l'une quelconque des revendications 1 à 4 ci-dessus, **caractérisée en ce que**
- les saillies de butée (107) et les poches de butée (108) sont disposées de manière symétrique en rotation ou répartis uniformément dans le sens circonférentiel autour de l'axe de pivotement respectif, de préférence avec une symétrie de rotation de 120° par rapport à l'axe de pivotement (A); et/ou
- pour limiter l'angle de pivotement, il est prévu respectivement un agencement de butée comportant exactement trois saillies de butée (107) dans chaque zone de chevauchement de l'une (102) des éclisses et, pour limiter l'angle de pivotement, il est prévu respectivement un agencement de butée comportant exactement trois poches de butée correspondants (108) dans chaque zone de chevauchement de l'autre (101) des éclisses (101), exactement une saillie de butée (107) s'engageant dans exactement une poche de butée correspondante (108).

6. Chaîne de guidage d'énergie selon l'une quelconque des revendications précédentes, **caractérisée en ce que** les éclisses extérieures (102) comportent chacune, dans chacune de leurs zones de chevauchement extérieures (104A, 104B), un agencement de butée comprenant exactement trois saillies de butée (107) et que les éclisses extérieures (102) sont réalisées de manière essentiellement symétrique par rapport à un premier plan de symétrie s'étendant dans le sens longitudinal et passant par les deux axes de pivotement (A), de préférence **caractérisée en outre en ce que** les éclisses extérieures (102) comportent une saillie de butée (107) située dans le premier plan de symétrie, laquelle est tournée vers la zone centrale (106) de l'éclisse extérieure (102) dans le sens longitudinal ou est détournée de la zone centrale (106) de l'éclisse extérieure (102) dans le sens longitudinal.

7. Chaîne de guidage d'énergie selon l'une quelconque des revendications précédentes, en particulier selon la revendication 4, **caractérisée en ce que** les surfaces de butée (107A, 107B) et les surfaces de contre-butée (108A, 108B) forment des surfaces au moins majoritairement planes, les deux surfaces de butée (107A, 107B) d'une saillie de butée (107) et/ou les deux surfaces de contre-butée (108A, 108B) d'une poche de butée (108) se coupent respectivement dans un axe de sommet imaginaire (C) qui se situe à l'intérieur de la zone de chevauchement, de préférence à l'intérieur d'une zone par un cercle inscrit imaginaire (D) situé radialement à l'intérieur d'un ou du contour en segment d'anneau circulaire des poches de butée (108),
caractérisée en outre de préférence **en ce que** les deux surfaces de contre-butée (108A, 108B) d'une poche de butée (108) se coupent respectivement selon un axe de sommet imaginaire (C) qui se situe à l'intérieur d'une zone d'une saillie d'articulation de forme annulaire servant de pivot d'articulation (110) ou d'un renfoncement en forme d'anneau circulaire servant de logement d'articulation (111) destiné à recevoir une saillie d'articulation correspondante d'une éclisse opposée.

8. Chaîne de guidage d'énergie selon l'une quelconque des revendications précédentes, **caractérisée en ce que** l'éclisse (101), de préférence l'éclisse intérieure (101), forme, entre deux poches de butée (108) successives dans le sens circonférentiel autour de l'axe de pivotement (A), un pont de matière (112) s'évasant vers l'extérieur, de préférence sensiblement en forme de V en coupe longitudinale, lequel présente de préférence, à son point le plus étroit, une dimension d'arc minimale ≥ 3 mm, en particulier ≥ 4 mm, l'éclisse (101) comportant de préférence un anneau de renfort périphérique (111B; 111 C) dans lequel se fondent les ponts de matière (112),
caractérisée en outre de préférence **en ce que** l'éclisse intérieure (101) comporte un anneau d'articulation radialement intérieur (111A) et, entre l'anneau d'articulation (111A) et l'anneau de renfort (111B), un renfoncement circulaire (111) servant de logement d'articulation pour recevoir une saillie d'articulation correspondante (110) de l'éclisse opposée, et
l'éclisse extérieure (102) comporte une saillie d'articulation (110) en forme d'anneau circulaire servant de pivot d'articulation, destinée à coopérer avec le logement d'articulation (111) de l'éclisse intérieure (101), la saillie d'articulation (110) de l'éclisse extérieure (102) et les saillies de butée (107) de l'éclisse extérieure (102) faisant saillie vers l'intérieur de préférence d'une distance sensiblement identique et se terminant à fleur dans un plan parallèle au plan de pivotement.

9. Chaîne de guidage d'énergie selon l'une quelconque des revendications précédentes, **caractérisée en ce que** les poches de butée (108) présentent une hauteur d'ouverture (h) radialement par rapport à l'axe de pivotement (A), qui s'élève à au moins 15 %, de préférence au moins 20 %, de la hauteur totale (H) de l'éclisse (101) perpendiculairement à la direction longitudinale, et les saillies de butée (107) présentant une dimension radiale correspondante, réduite seulement du jeu de mouvement, radialement par rapport à l'axe de pivotement (A).

10. Chaîne de guidage d'énergie selon l'une quelconque des revendications précédentes, **caractérisée en ce que** la chaîne de guidage d'énergie comprend au moins deux sections longitudinales,
avec une première section longitudinale dans laquelle la chaîne de guidage d'énergie ne présente aucun rayon de courbure vers l'arrière et dans laquelle est prévu un premier type de l'une des éclisses, de préférence un premier type des éclisses extérieures (102), présentant une première mesure angulaire (α1) plus grand de la largeur de blocage des saillies de butée (107),
avec une deuxième section longitudinale dans laquelle la chaîne de guidage d'énergie présente un rayon de courbure vers l'arrière et dans laquelle est prévu un deuxième type de l'une des éclisses, de préférence un deuxième type des éclisses extérieures (102), présentant une deuxième mesure angulaire (α2) plus petit de la largeur de blocage des saillies de butée (107), la deuxième mesure angulaire (α2) étant nettement plus petit que la première mesure angulaire (α1), de sorte que le deuxième type de l'une des éclisses, de préférence des éclisses extérieures (102), peut pivoter, en plus, dans une direction de pivotement vers l'arrière opposée par rapport aux autres éclisses du premier type.

11. Chaîne de guidage d'énergie selon l'une quelconque des revendications précédentes, **caractérisée en ce que** deux saillies de retenue (121) sont prévues d'un seul tenant au niveau d'une zone centrale (105) d'une éclisse (101), en particulier de l'éclisse intérieure (101), lesquelles font saillie au-dessus d'un espace libre correspondant dans lequel une autre éclisse adjacente (102), en particulier une éclisse extérieure (102) prévue d'une zone de guidage (120) en forme d'arc de cercle s'étendant parallèlement au plan de pivotement, peut s'engager pour assurer la stabilisation latérale; et/ou
l'éclisse extérieure (102) présente, dans des zones effilées (113) situées aux extrémités longitudinales de la zone de chevauchement (104A, 104B), une épaisseur de matériau plus mince par rapport à sa largeur d'éclisse que dans sa zone centrale (105) située entre celles-ci, une zone (114) présentant une épaisseur de matériau supérieure à celle des zones effilées (113) s'étendant dans la direction longitudinale (L), de préférence sur au moins 80 % du pas de la chaîne, et/ou recouvre notamment au moins 25 % du diamètre de l'axe d'articulation ou de la saillie d'articulation (110) de forme annulaire.

12. Chaîne de guidage d'énergie selon le terme générique de la revendication 1 et/ou selon l'une des revendications précédentes, **caractérisée en ce que**
au moins une saillie de butée (207A, 207B) comporte un élément de maintien (230A, 230B) faisant saillie radialement, et au moins une poche de butée correspondante (208A, 208B) comporte un élément de retenue (231A, 231B) faisant saillie radialement, l'élément de maintien (230A, 230B) et l'élément de retenue (231A, 231B) coopérant de telle sorte qu'ils maintiennent latéralement les éclisses reliées les unes contre les autres.

13. Chaîne de guidage d'énergie selon la revendication 12, **caractérisée en ce qu'**exactement deux saillies de butée (207A, 207B) présentent chacune un élément de maintien (230A, 230B) saillant radialement, et les deux poches de butée correspondantes (208A, 208B) comportent un élément de retenue (231A, 231B) saillant radialement et coopérant.

14. Chaîne de guidage d'énergie selon la revendication 12 ou 13, **caractérisée en ce que** chaque élément de maintien (230A, 230B) et chaque élément de retenue (231A, 231B)
- est prévu respectivement sur la zone périphérique radialement extérieure de la saillie de butée (207A, 207B) ou de la poche de butée (208A, 208B); et/ou
- s'étend de manière circonférentielle ou en forme d'arc; et/ou
- est réalisé sous la forme d'un ergot d'encliquetage faisant saillie radialement, comportant notamment une face d'introduction inclinée (233) oblique par rapport au plan de pivotement et une surface d'encliquetage (234; 235) parallèle au plan de pivotement, et pouvant de préférence s'encliqueter de manière amovible avec l'élément coopérant correspondant lors de l'assemblage des éclisses.

15. Chaîne de guidage d'énergie selon la revendication 12, 13 ou 14, **caractérisée en ce**
**que** deux éléments de maintien (230A, 230B) sont prévus sur des saillies de butée (207A, 207B) de l'éclisse extérieure (202), symétriquement par rapport à un plan médian longitudinal, et que deux éléments de retenue (231A, 231B) sont prévus dans des poches de butée correspondantes (208A, 208B) de l'éclisse intérieure (201), de manière asymétrique par rapport à un plan médian longitudinal; et/ou en ce que
deux éléments de retenue (231A, 231B) sont prévus dans des poches de butée correspondantes (208A, 208B) de manière décalée angulairement par rapport à l'axe de pivotement (A) et/ou selon des mesures angulaires différentes autour de l'axe de pivotement (A), de préférence de telle sorte qu'ils maintiennent latéralement les éclisses reliées l'une contre l'autre sur au moins une partie prépondérante de l'angle de pivotement.
